# EUROPÄISCHE PATENTSCHRIFT

(11) **EP 4 130 686 B1**
(45) Veröffentlichungstag und Bekanntmachung des Hinweises auf die Patenterteilung: **12.03.2025**
(21) Anmeldenummer: 22197481.9
(22) Anmeldetag: 15.10.2019
(51) Int. Cl.: G01D 21/00

(54) **VERFAHREN ZUR DURCHFÜHRUNG VON MESSAUFGABEN UND ZUR VERWALTUNG VON MESSDATEN**
PROCEDURE FOR CARRYING OUT MEASUREMENT TASKS AND MANAGING MEASUREMENT DATA
PROCÉDURE DE MISE EN OUVRE DES TÂCHES DE MESURE ET POUR LA GESTION DES DONNÉES DE MESURE

(30) Priorität: 15.10.2018 DE 102018008125
(43) Veröffentlichungstag der Anmeldung: 08.02.2023
(62) Teilanmeldung aus: 19789943.8
(73) Patentinhaber: Refco Manufacturing Ltd., 6285 Hitzkirch (CH)
(72) Erfinder: ULRICH, Manfred, 6285 Hitzkirch (CH); DEMUTH, Ulrich, 64711 Erbach (DE); OSWALD, Michael, 6005 Luzern (CH)
(74) Vertreter: Liedtke & Partner Patentanwälte

(56) Entgegenhaltungen:
- WO-A1-2010/028788
- WO-A1-2017/022905
- CN-A- 102 697 498
- JP-A- 2004 096 906
- US-A1- 2014 025 321
- US-A1- 2017 163 608

## Beschreibung

### TECHNISCHES GEBIET

Die Erfindung betrifft ein Verfahren zur Durchführung von Messaufgaben und zur Verwaltung von Messdaten.

### STAND DER TECHNIK

Chemische Industrieanlagen sind mit einer Vielzahl von Messstellen versehen, die turnusmäßig kalibriert werden müssen. Hierzu ist notwendig, dass parallel zu den Messstellen Vergleichsmessungen erfolgen und hierfür zum Beispiel Messfühler in vorbereiteten Referenzöffnungen oder an/in Serviceanschlüssen platziert werden und mittels der Messfühler Messungen durchgeführt werden. Um einen turnusmäßigen Messverlauf über einen Zeitraum zu verfolgen, ist es günstig, die Messdaten aufzuzeichnen, zentral zu speichern und vor Ort verfügbar zu machen. Ebenso erleichtert eine Funkverbindung zu einer Messstelle oder einer zentralen Datenablage die Handhabung.

Insbesondere an Klimaanlagen ist ein optimierter Service mit Messgeräten sinnvoll. Klimaanlagen bestehen im Wesentlichen aus einem Kreislauf mit zwei Wärmetauschern, einem geregelten Entspannungsventil und einer Pumpe, wobei der Kreislauf mit einem Kältemittel gefüllt ist. Das gasförmige Kältemittel wird von der Pumpe verdichtet und kondensiert unter Wärmeabgabe in einem Wärmetauscher in einem Hochdruckteil (englisch: high pressure; kurz: HP) der Klimaanlage. Das Kältemittel wird am Ventil entspannt und nimmt bei der Verdampfung in einem Wärmetauscher im Niederdruckteil (englisch: low pressure; kurz: LP) der Klimaanlage Wärmeenthalpie auf und kühlt so dort ein Medium ab. Das verdampfte Kältemittel im Niederdruckteil der Klimaanlage wird erneut der Pumpe zugeführt.

Zur Befüllung oder Nachfüllung einer Klimaanlage mit Kältemittel wird diese routinemäßig mittels einer Vakuumpumpe abgesaugt und dadurch auch entfeuchtet. Danach wird die Klimaanlage befüllt, wobei ein Druck im Hochdruckteil und hinter dem Entspannungsventil im Niederdruckteil auf bestimmte Werte je nach Dampfdruck-Temperatur des verwendeten Kältemittels eingestellt wird. Hierbei hängt der Wirkungsgrad der Klimaanlage unter anderem von diesen eingestellten Werten ab. Aus Druck- und Temperaturmessdaten im HP- und LP-Abschnitt einer Klimaanlage können die Enthalpien ermittelt werden. Hierzu werden kältemittelspezifische Hilfstabellen herangezogen. Aus den Enthalpien und der elektrischen Leistungsaufnahme der Klimaanlage kann dann ein Wirkungsgrad nach der Definition eines branchenüblichen Wirkungsgrads, wie beispielsweise EER (Energy Efficiency Ratio) oder COP (Coefficient of Performance), berechnet werden.

Aus dem Stand der Technik sind allgemein rein mechanische Servicegeräte zur Unterstützung von Monteuren bei der Inbetriebnahme oder Wartung von Klimaanlagen bekannt.

Aus der DE202012010642U1 ist ein digitales Servicegerät mit einem Gehäuse, mit einem Ventilblock mit einem Hochdruckanschluss (HP-Anschluss) und einem zugehörigen Ventil, einem Niederdruckanschluss (LP-Anschluss) und einem zugehörigen Ventil und einem Serviceanschluss, einem niederdruckseitigen Temperatursonden-Anschluss, einem hochdruckseitig Temperatursonden-Anschluss und einer elektronischen Auswertung, welche mit einem Stromspeicher versehen ist und davon gespeist wird, bekannt. Die Auswertung ist mit Tasten verbunden, welche mit geräteinternen Drucksensoren verbunden ist, die an dem Ventilblock druckdicht angeschlossen sind. Weiterhin ist die Auswertung mit zwei Anschlüssen für externe Temperatursonden verbunden und weist einen Datenspeicher und eine Anzeigensteuerungseinrichtung auf, die mit einer digitalen Anzeige verbunden ist.

Hierbei kann der Monteur kabelgebundene Temperatursensoren für die Messung des Drucks im Hochdruckteil und Niederdruckteil der Klimaanlage verwenden.

Weiterhin ist aus der WO 2010/028788 A1 ein Verfahren zum Ermitteln und Verwalten von Daten aus einer Vielzahl von Messgeräten bekannt, wobei in mehreren Messstationen jeweils Daten aus einem Messgerät ermittelt und in einer Server-Rechnereinheit zu clientfähigen Daten bearbeitet und zur Verfügung gestellt werden. In einer Clientstation mit einer Client-Rechnereinheit werden die durch die Server-Rechnereinheiten der Messstationen zur Verfügung gestellten Daten über ein Kommunikationsnetzwerk abgerufen und weiter bearbeitet.

Die US 2014/0025321 A1 beschreibt Stromzähler zur Beantwortung von Benutzerdaten- und Informationsanfragen bezüglich eines Stromverbrauchs und einer Stromqualität für jeden Messpunkt innerhalb eines Stromverteilungssystems. Der Stromzähler umfasst:
- eine erste Netzwerkschnittstelle, die konfiguriert ist eine clientseitige Informationsanfrage, eine Datenanfrage oder eine Konfigurationsanfrage zu empfangen, die Anfrage gemäß einem oder mehreren Netzwerkprotokollen zu verarbeiten und die Anfrage über einen Netzwerk-Socket-Schnittstellenübersetzer an eine zweite Netzwerkschnittstelle weiterzuleiten;
- einen Netzwerk-Socket-Schnittstellenübersetzer, der mit der ersten Netzwerkschnittstelle gekoppelt und dafür konfiguriert ist, Verwaltungssignale zwischen einem Netzwerkschnittstellenmodell der ersten Netzwerkschnittstelle und einem Netzwerkschnittstellenmodell der zweiten Netzwerkschnittstelle zu übersetzen, um die Übertragung von Daten zum/vom Stromzähler und einem Client-Gerät zu erleichtern und die Anfragen von der ersten Netzwerkschnittstelle an die zweite Netzwerkschnittstelle weiterzuleiten;
- Protokollroutinen, die über die zweite Netzwerkschnittstelle mit dem Netzwerk-Socket-Schnittstellenübersetzer gekoppelt sind, wobei die Protokollroutinen dazu konfiguriert sind, die clientseitigen Datenanfragen zu verarbeiten, indem die Anfrage als eine der Informationsanfragen, Datenanfragen und Konfigurationsanfragen identifiziert wird, eine interne Datenanfrage zu erstellen, wenn die Anfrage als eine Datenanfrage oder eine Konfigurationsanfrage identifiziert wird, und die interne Datenanfrage an eine Datenschnittstelle weiterzuleiten;
- die Datenschnittstelle, welche mit den Protokollroutinen gekoppelt und konfiguriert ist, die interne Datenanfrage zu erhalten, die interne Datenanforderung von einem Protokollroutinenformat in ein natives Datenbankformat zu übersetzen, Daten aus einer nativen Datenbank entsprechend der Anfrage anzufordern; und
- die native Datenbank, welche an die Datenschnittstelle gekoppelt und konfiguriert ist, die Datenanforderung von der Datenschnittstelle zu empfangen, die angeforderten Daten von einer Messeinheit des Stromzählers abzurufen und die angeforderten Daten über die Datenschnittstelle, Protokollroutinen, den Netzwerk-Socket-Schnittstellenübersetzer und die Netzwerkschnittstelle an einen anfragenden Client weiterzuleiten.

Weitere Verfahren und Vorrichtungen zu einer Datenerfassung und/oder Datenverwaltung sind in der CN 102 697 498 A, der US 2017/163608 A1, der JP 2004 096906 A und der WO 2017/022905 A1 beschrieben.

### AUFGABE DER ERFINDUNG

Es ist die Aufgabe der Erfindung, ein gegenüber dem Stand der Technik verbessertes Verfahren zur Durchführung von Messaufgaben und zur Verwaltung von Messdaten anzugeben.

Die Aufgabe wird mit einem Verfahren, welches die im Anspruch 1 genannten Merkmale aufweist, gelöst.

Vorteilhafte Ausgestaltungen der Erfindung sind Gegenstand der abhängigen Ansprüche.

### ZUSAMMENFASSUNG DER ERFINDUNG

Ein erfindungsgemäßes Verfahren zur Durchführung von Messaufgaben und zur Verwaltung von Messdaten mittels eines Systems, umfassend zumindest ein Messgerät, zumindest einen als messgeräteintegrierte Mensch-Maschine-Schnittstelle oder als vom Messgerät losgelöstes, tragbares Computergerät mit Bildschirm ausgebildeten Informationsträger, welcher beispielsweise Bestandteil des Messgeräts ist, zumindest einen Cloud-Server mit einer Cloud-Applikation und zumindest ein Benutzerkonto in der Cloud-Applikation. Das Messgerät und/oder der Informationsträger werden/wird oder sind/ist dem Benutzerkonto zugeordnet. Eine Kopplung des Messgeräts und/oder des Informationsträgers mit dem Benutzerkonto erfolgt beispielsweise bei einer Erstanmeldung auf dem Benutzerkonto. Das Messgerät stellt Messdatenprotokolle, in welchen von Sensoren empfangene Messdaten enthalten sind, bereit, die dem Benutzerkonto zugeordnet sind, und das Messgerät und/oder der Informationsträger weitere Datensätze mit den Messdatenprotokollen. Weiterhin ist ein Computergerät vorgesehen, wobei das Computergerät oder der Informationsträger dem Benutzerkonto zugeordnet ist, und wobei das Messgerät und/oder der Informationsträger mit dem Computergerät Messdatenprotokolle und/oder weitere Datensätze austauschen. Hierzu ist keine Datenverbindung zum Cloud-Server vorhanden oder erforderlich oder eine vorhandene Datenverbindung zum Cloud-Server ist während des Austauschs unterbrochen.

In einer möglichen Ausgestaltung des Verfahrens verknüpft zusätzlich die Cloud-Applikation weitere Datensätze mit den Messdatenprotokollen.

In einer weiteren möglichen Ausgestaltung des Verfahrens ist der Funktionsträger oder das Computergerät dem Benutzerkonto zugeordnet, wobei auf dem Computergerät und/oder dem Informationsträger bestimmte Speicher- und Analysefunktionen erst nach einer Verknüpfung oder Erstanmeldung mit einem Benutzerkonto auf dem Cloud-Server aktiviert werden.

In einer weiteren möglichen Ausgestaltung des Verfahrens wird bei einer Erstverknüpfung oder bei einem Verbindungsaufbau eine Identifikation des Messgeräts mit einer Identifikation eines Informationsträgers oder eines Computergeräts und mit einem Benutzerkonto auf dem Cloud-Server gekoppelt. Hierfür werden oder wird als Anmeldekennung eine IMEI Nummer, eine Mobilfunknummer und/oder eine Emailadresse mit einem Benutzer und einem Password gekoppelt.

In einer weiteren möglichen Ausgestaltung des Verfahrens sind dem Benutzerkonto verschiedene Anlagen oder Klimaanlagen zuordbar oder zugeordnet, wobei in dem Benutzerkonto eine ID Nummer einer Anlage oder Klimaanlage hinterlegt ist, unter welcher ein Datensatz mit Messdaten einer Anlage oder Klimaanlage ablegbar oder abgelegt ist.

In einer weiteren möglichen Ausgestaltung des Verfahrens sind oder ist dem Datensatz einer Anlage eine GPS Position, ein Bild, ein Film oder eine Kundenreferenz zuordbar oder zugeordnet.

Ein in dem Verfahren verwendetes Messgerät, nachfolgend auch als Servicegerät bezeichnet, kann ein Gehäuse, zumindest einen internen Sensor, eine elektronische Steuereinheit, zumindest ein Funkmodul, eine Bedieneinrichtung und einen Informationsträger umfassen. Das Messgerät kann dazu eingerichtet sein, mit externen Sensoren in kabelgebundener und/oder kabelloser Verbindung zu stehen. Die elektronische Steuereinheit ist dazu eingerichtet, Messsignale interner und externer Sensoren in digitale Messdaten umzuwandeln und die digitalen Messdaten für den Informationsträger bereitzustellen. Dabei ist der Informationsträger dazu konfiguriert, bei gleichzeitiger Verfügbarkeit von kabelgebundenen oder kabellos verbundenen Sensoren, entweder die Daten der kabelgebundenen oder die Daten der kabellos verbundenen Sensoren mit Vorrang bereitzustellen und zu visualisieren.

Mittels des Mess- oder Servicegeräts ist in vorteilhafter Weise eine intelligente Unterstützung eines Monteurs bei einer Inbetriebnahme oder Wartung einer Klimaanlage realisierbar, indem Daten für den Informationsträger bereitgestellt und/oder an diesen übertragen werden. Der Informationsträger kann diese Daten visualisieren, weiterverarbeiten und/oder analysieren. Somit wird ein Messgerät geschaffen, mit welchem eine Inbetriebnahme und Wartung von Industrieanlagen in der Chemieindustrie, insbesondere aber auch an Klimaanlagen, Klima-/Kälteanlagen und Wärmepumpen (nachfolgend zusammengefasst als Klimaanlage bezeichnet) erleichtert wird.

Dabei ist das Messgerät kostengünstig und ermöglicht einem Nutzer durch die intelligente Unterstützung eine verbesserte und erleichterte Bedienung und Kopplung von kabelgebundenen und/oder drahtlosen Sensoren.

In einer möglichen Ausgestaltung des Messgeräts ist das Funkmodul dazu ausgebildet, über eine oder mehrere Funktechnologien und/oder Protokolle mit anderen Geräten zu kommunizieren, beispielsweise gemäß dem so genannten Bluetooth-Standard, gemäß dem Standard der IEEE-802.11-Familie, beispielsweise Wireless-LAN, oder gemäß einem Mobilfunkstandard.

In einer weiteren möglichen Ausgestaltung des Messgeräts ist der Informationsträger direkt mit drahtlosen Temperatur- oder Drucksensoren verbunden, die Messdaten an ihn übertragen oder indirekt über die elektronische Steuereinheit mit drahtlosen und/oder kabelgebundenen Temperatur- oder Drucksensoren verbunden. Im zuletzt genannten Fall übertragen die kabelgebundenen und/oder drahtlosen Sensoren Messdaten an die elektronische Steuereinheit. Die Steuereinheit kann diese Daten verarbeiten, analysieren und/oder in verarbeiteter oder unverarbeiteter Form an den Informationsträger übertragen.

Je nach Konfiguration oder Sensortyp ist der Informationsträger dazu eingerichtet, bei gleichzeitiger Verbindung zu kabelgebundenen und drahtlosen Sensoren entweder die Daten der kabelgebundenen oder die Daten der drahtlosen Sensoren automatisch mit Vorrang bereitzustellen und zu visualisieren.

Mit Konfiguration ist in diesem Zusammenhang die Konfiguration und Parametrierung des Mess- oder Servicegeräts gemeint, die zumindest, aber nicht ausschließlich, folgende Einstellungen betreffen kann:
- Auswahl eines Kältemittels
- Auswählen einer Anzeigefunktion des Servicegeräts;
- Auswählen eines bevorzugten Sensortyps, das heißt drahtlose Sensoren oder kabelgebundene Sensoren.

Unter Sensortyp wird in diesem Zusammenhang beispielsweise sowohl
- der Sensortyp im Sinne des Messprinzips (Relativdruck-, Absolutdruck-, Vakuum-Drucksensor, Widerstandsthermometer, Thermoelement),
- der Sensortyp in Bezug auf die Verbindung zum Mess- oder Servicegerät (kabelgebunden, drahtlos über ein bestimmtes Funkprotokoll) als auch
- der Sensortyp im Sinne einer zugewiesenen Anzeigefunktion (HP - High Pressure, Hochdruck, oder LP - Low Pressure, Niederdruck), oder
- eine Kombination aus diesen Kategorien
verstanden.

Die Daten, insbesondere Messdaten, eines Sensors gegenüber den Daten eines anderen Sensors durch den Informationsträger mit Vorrang bereitzustellen oder zu visualisieren bedeutet in diesem Zusammenhang beispielsweise, dass die Daten von dem mit Vorrang behandelten Sensor vom Informationsträger verarbeitet, analysiert und/oder auf einem Bildschirm visualisiert werden, während die Daten des anderen Sensors nicht verarbeitet, analysiert und/oder auf einem Bildschirm visualisiert werden oder zumindest nicht zeitgleich verarbeitet, analysiert und/oder auf einem Bildschirm visualisiert werden.

In einer weiteren möglichen Ausgestaltung des Messgeräts verwendet oder visualisiert der Informationsträger Messdaten von einem externen kabelgebundenen oder kabellos verbundenen Sensor mit Vorrang gegenüber Messdaten von dem internen Sensor.

In einer weiteren möglichen Ausgestaltung des Messgeräts umfasst dieses einen Ventilblock. Der Ventilblock umfasst einen Hochdruckanschluss und ein zugehöriges Sperrventil zur Verbindung mit einem Hochdruckteil einer Klimaanlage, einen Niederdruckanschluss und ein zugehöriges Sperrventil zur Verbindung mit einem Niederdruckteil der Klimaanlage und mindestens einen Serviceanschluss, insbesondere ausgebildet zu einer Verbindung mit einer Druckgasflasche oder einer Pumpe. Dabei stehen der Hochdruckanschluss und der Niederdruckanschluss jeweils mit einem geräteinternen Drucksensor in druckdichter, fluidischer Verbindung.

In einer weiteren möglichen Ausgestaltung des Messgeräts umfasst dieses eine Druckerzeugungseinrichtung und/oder eine Druckregeleinrichtung.

In einer weiteren möglichen Ausgestaltung des Messgeräts ist der Informationsträger durch eine fest mit dem Messgerät und mit der elektrischen Steuereinheit verbundene Bildschirmeinheit realisiert. Diese Bildschirmeinheit kann beispielsweise ein LCD-Display, ein LED- oder OLED-Display, oder ein holographischer Bildschirm sein. Die Bildschirmeinheit kann von einer optionalen Bildschirmtreibereinheit angesteuert werden.

In einer weiteren möglichen Ausgestaltung des Messgeräts ist die fest mit dem Messgerät und mit der elektronischen Steuereinheit verbundene Bildschirmeinheit mit der Bedieneinrichtung in Form eines Touch-Displays kombiniert. Hierfür kommen resistive, kapazitive und induktive Berührungserkennung in Frage.

In einer weiteren möglichen Ausgestaltung des Messgeräts kann die Bedieneinrichtung jedoch auch durch Tastknöpfe realisiert sein.

In einer weiteren möglichen Ausgestaltung des Messgeräts mit einem als vom Servicegerät losgelösten, tragbaren Computergerät mit Bildschirm ausgebildeten Informationsträger ist dieser beispielsweise als ein Laptop, ein Tablet-Computer oder ein intelligentes Mobilfunkgerät, auch als Smartphone bezeichnet, ausgebildet. Das tragbare Computergerät steht mit dem Servicegerät über die Funkeinheit der elektronischen Steuereinheit in drahtloser Verbindung. Für diese Verbindung kommen Technologien und Protokolle gemäß dem so genannten Bluetooth-Standard, gemäß dem Standard der IEEE-802.11-Familie, beispielsweise Wireless-LAN, oder gemäß einem Mobilfunkstandard in Frage. Dabei kann das tragbare Computergerät direkt mit drahtlos verbundenen und/oder kabelgebundenen Sensoren verbunden sein.

Unabhängig von der Ausgestaltung des Informationsträgers ist das Mess- oder Servicegerät in einer weiteren möglichen Ausgestaltung derart eingerichtet, dass es von verbundenen Sensoren empfangene Messdaten in Messdatenprotokollen in einem internen Datenspeicher des Messgeräts abspeichert. Hierzu ist beispielsweise die elektronische Steuereinheit eingerichtet, Messdaten von den kabelgebundenen und/oder drahtlos verbundenen Sensoren im Datenspeicher als Messdatenprotokolle zwischenzuspeichern und mit weiteren Datensätzen zu verknüpfen.

Wird in einer darauf aufbauenden weiteren Ausgestaltung des Messgeräts eine Funkverbindung zwischen diesem und einem tragbaren Computergerät mit Bildschirm aufgebaut, werden die Messdatenprotokolle automatisch an das tragbare Computergerät übertragen. Diese Funktion ist insbesondere dann vorteilhaft, wenn eine bestehende Verbindung vom Mess- oder Servicegerät zu einem tragbaren Computergerät mit Bildschirm während einer Inbetriebnahme oder Wartung einer Klimaanlage zwischenzeitlich abbricht. Sobald die Verbindung wiederhergestellt ist, werden in der Zwischenzeit aufgezeichnete Messdatenprotokolle an das tragbare Computergerät übertragen. Der Monteur kann diese dann auf dem Computergerät betrachten und es gehen keine Messinformationen verloren.

Das Mess- oder Servicegerät ist dazu eingerichtet, mit drahtlosen und/oder kabelgebundenen Druck- und Temperatursensoren verbunden zu werden.

Zu Drucksensoren zählen sowohl relativ zum Umgebungsdruck messende Sensoren, als auch absolut messende Sensoren, sowie Vakuumsensoren.

Um kabelgebundene Sensoren nutzen zu können, kann das Servicegerät mit Steckerbuchsen ausgestattet sein.

Funksensoren dagegen verfügen über eine Batterie-/Akkuzelle als Stromversorgung und übertragen ihre Messdaten über integrierte Funkmodule. Hierzu ist vorab eine Kopplung mit dem Servicegerät notwendig. Zu diesem Zweck wird am Servicegerät eine Funktion zur Einbindung von Funksensoren gestartet, woraufhin erreichbare eingeschaltete Funksensoren auf dem Informationsträger, beispielsweise in einer Liste, auswählbar angezeigt werden. Diese Sensoren sind dann auswählbar und mit dem Servicegerät koppelbar. Hierzu senden diese Funksensoren an das Servicegerät eine Kennung, welche auch speziellen Funktionen dauerhaft zugeordnet werden kann. So kann zum Beispiel ein Drucksensor für eine HP-Funktion und/oder Anzeigefunktion zugeordnet werden. Diese wird dann dauerhaft auch bei Wiedereinschalten des Servicegeräts automatisch als solche wiedererkannt und kann dann in dieser Funktion und/oder Anzeigefunktion wiederverwendet werden.

Optional ist ein Funksensor auch mit einer farblichen Kennung versehbar, oder über einen verborgenen Mikroschalter direkt als HP- oder LP-Sensor dauerhaft konfigurierbar. Optional verfügt der Sensor über einen internen Speicher, in dem dieser Messwerte speichert, um diese bei einer Verbindungunterbrechung solange vorzuhalten, bis die Verbindung zum Servicegerät wieder aufgenommen werden kann. Hierfür ist auch denkbar, dass eine Statusanzeige als Leuchte oder LED die Farbe wechselt, wenn ein bestimmter Zustand eingetreten ist, wie beispielsweise ein niedriger Akkustand oder eine schlechte oder unterbrochene Datenverbindung.

In einer weiteren möglichen Ausgestaltung des Messgeräts sind die drahtlosen Sensoren mit einem wieder aufladbaren Akku als Stromspeicher versehen. Zum Aufladen ihres Stromspeichers können die Sensoren an das Servicegerät angeschlossen werden, um mit Energie aus einem Hauptstromspeicher des Servicegeräts aufgeladen zu werden. Der Hauptstromspeicher kann als wieder aufladbarer Akku ausgebildet sein oder auch aus austauschbaren Batterien bestehen. Der Anschluss der Sensoren kann über eine sensorspezifische Kupplung am Servicegerät erfolgen, in die ein Teil des Sensors eingeführt oder gesteckt werden kann.

Für Temperatursensoren, die in Form von Klammern ausgestaltet sind, können in einer weiteren möglichen Ausgestaltung auch Auswölbungen oder herausragende Leisten oder Stifte am Gehäuse des Servicegeräts vorgesehen sein, an oder um die sich die Klammern schließen lassen. Somit wird eine elektrische Verbindung hergestellt, über die das Aufladen des Stromspeichers des Sensors erfolgt.

Auch kabelgebundenen und drahtlosen Temperatursensoren kann eine "HP - High Pressure" oder "LP - Low Pressure" Funktion zugewiesen werden. In diesem Zusammenhang ist ein HP-Temperatursensor als Temperatursensor zu verstehen, der im Hochdruckbereich einer Klimaanlage anzuschließen ist, während ein LP-Temperatursensor im Niederdruckbereich einer Klimaanlage anzuschließen ist.

In einer weiteren möglichen Ausgestaltung des Messgeräts ist der Informationsträger eingerichtet, einem externen Sensor aufgrund eines vom externen Sensor übertragenen Kennungssignals und/oder eines vom externen Sensor übertragenen Messbereichs und/oder der vom externen Sensor übertragenen Messsignale eine Niederdruck-Anzeigefunktion oder eine Hochdruck-Anzeigefunktion oder eine Unterdruck-/Vakuum-Anzeigefunktion zuzuordnen.

In einer weiteren möglichen Ausgestaltung des Messgeräts ist der Informationsträger eingerichtet, verfügbare Sensoren anzuzeigen, wobei bei Verlust einer Datenverbindung zu einem kabelgebundenen Sensor dem Messgerät automatisch ein kabellos verbindbarer Sensor zuordbar ist bzw. zugeordnet wird.

In einer weiteren möglichen Ausgestaltung des Mess- oder Servicegeräts unterstützt dieses den Monteur intelligent bei der Verbindung und Verwaltung von kabelgebundenen und drahtlosen Sensoren durch die Anwendung von spezifischen Routinen, die vom Sensortyp und/oder der Konfiguration des Servicegeräts abhängen.

Eine mögliche Routine in dieser Ausgestaltung umfasst, dass das Servicegerät einen neuen verfügbaren drahtlosen Sensoren automatisch erkennt und die Verbindung zu dem Sensor herstellt, wenn keine Verbindung zu einem kabelgebundenen Sensor mit der gleichen Messfunktion besteht oder die Verbindung zu einem kabelgebundenen Sensor unterbrochen wird. Wird also z. B. ein drahtloser Temperatursensor erkannt, dem eine "HP - High Pressure" Funktion zugewiesen ist, und das Servicegerät ist nicht mit einem kabelgebundenen HP-Temperatursensor verbunden oder die Verbindung zu einem solchen kabelgebundenen Temperatursensor wird unterbrochen, wird umgehend eine Verbindung zu einem entsprechenden drahtlosen Temperatursensor aufgebaut.

Eine weitere mögliche Routine in dieser Ausgestaltung umfasst, dass das Servicegerät bei Verfügbarkeit von drahtlosen, externen Drucksensoren automatisch eine Verbindung zu diesen herstellt und deren Messdaten bevorzugt gegenüber Messdaten der internen Drucksensoren verwendet und über den Informationsträger visualisiert. In diesem Fall signalisiert eine Anzeige auf dem Informationsträger, dass sich die Datenquelle geändert hat. Dieser Routine liegt der Gedanke zugrunde, dass ein externer Drucksensor, der direkt an eine Klimaanlage angeschlossen ist, im Allgemeinen immer unverfälschtere Messwerte zu den tatsächlichen Druckverhältnissen in der Klimaanlage liefern kann, als die im Servicegerät integrierten Sensoren, da zwischen dem HP- bzw. LP-Anschluss am Ventilblock des Servicegeräts und der Klimaanlage stets eine Schlauchverbindung liegt. Diese Schlauchverbindung könnte z. B. zeitweise gequetscht sein und dadurch den Druckausgleich zwischen Klimaanlage und Servicegerät behindern.

In einer weiteren möglichen Ausgestaltung des Messgeräts ist dieses dazu eingerichtet, mit einer Waage eine Funkverbindung herzustellen und Wiegedaten von der Waage zu empfangen. Die Waage kann mit einem Druckbehälter beladen werden, der ein Kühlmittel beinhaltet. Während des Befüllens einer Klimaanlage mit dem Kältemittel kann das abnehmende Gewicht des Druckbehälters durch die Waage erfasst und die Gewichtswerte an das Servicegerät übertragen werden. Über den Informationsträger kann dann sowohl ein aktuelles Absolutgewicht des Druckbehälters als auch eine Gewichtsänderungen des Druckbehälters während des Füllprozesses angezeigt werden. Die Gewichtsänderung des Druckbehälters entspricht dabei dann der Menge an Kühlmittel, die in die Klimaanlage gefüllt wird.

Wenn der Monteur zum Füllen der Klimaanlage den Druckbehälter am Serviceanschluss des Ventilblocks am Servicegerät angeschlossen hat, führt diese Ausgestaltung somit zu dem Vorteil, dass der Monteur direkt über den Informationsträger die Gewichtsänderung des Druckbehälters verfolgen kann und sofort die Sperrventile am Ventilblock verschließen kann, wenn die gewünschte Masse an Kühlmittel aus dem Druckbehälter heraus, über den Serviceanschluss, den Ventilblock sowie die LP- und/oder HP-Anschlüsse des Ventilblocks in die Klimaanlage geströmt ist.

In einer weiteren möglichen Ausgestaltung des Messgeräts ist ein Schaltventil vorgesehen, welches mit dem Messgerät kabelgebunden oder kabellos verbunden ist, wobei ein externer Sensor dazu eingerichtet ist, ein Gewicht zu messen und das Schaltventil durch das Messgerät bei Erreichung eines Zielwerts des gemessenen Gewichts betätigt wird.

In einer weiteren möglichen Ausgestaltung des Messgeräts kann der Füllprozess weiter vereinfacht werden, indem das elektrische Schaltventil dann betätigt wird, wenn ein zuvor festgelegter Schwellwert der Gewichtsänderung durch die Waage festgestellt wird oder wenn ein anderer Druck- oder Temperaturschwellwert durch einen mit dem Servicegerät verbundenen Sensor an der Klimaanlage detektiert wird.

Das heißt, das Messgerät empfängt Gewichtsdaten des Behälters und bei einer Entnahme des Kältemittels aus dem Behälter oder einer Befüllung des Behälters mit Kältemittel und Erreichung des Schwellwerts des Gewichts des Behälters schließt das Schaltventil eine fluidische Verbindung zwischen dem Behälter und der Anlage, insbesondere Klimaanlage.

In einer weiteren möglichen Ausgestaltung des Messgeräts ist das Schaltventil direkt mit der Waage verbunden. Die Waage empfängt über die Funkverbindung zum Servicegerät eine Vorgabe für die Masse an Kühlmittel, die in die Klimaanlage gefüllt werden soll. Die Waage steuert dann selbstständig das elektrische Schaltventil, um den Zufluss von Kühlmittel in die Klimaanlage zu regulieren.

In einer weiteren möglichen Ausgestaltung des Messgeräts ist das Schaltventil über eine Funkverbindung oder kabelgebunden mit dem Mess- oder Servicegerät verbunden. Das Mess- oder Servicegerät steuert dann selbstständig oder ausgelöst durch eine Bedienereingabe das elektrische Schaltventil, um den Zufluss von Kühlmittel in die Klimaanlage zu regulieren.

In einer weiteren möglichen Ausgestaltung des Messgeräts ist dieses dazu eingerichtet, einen akustischen und/oder optischen Alarm bei Erreichung bestimmter definierter Zustände auszugeben. Als solche definierte Zustände können gelten:
- Erreichung eines höchstzulässigen Druckwerts;
- Erreichung eines höchstzulässigen Temperaturwerts;
- Überschreitung einstellbaren Größe (Druck, Temperatur oder Gewicht);
- Eintreten eines niedrigen Akkustands.

Ein optischer Alarm ist in diesem Zusammenhang beispielsweise als Signalisierung über den Informationsträger oder aber zum Beispiel als Aufleuchten oder Blinken eine Leuchte am Servicegerät zu verstehen.

In einer weiteren möglichen Ausgestaltung des Messgeräts ist die elektronische Steuereinheit dazu eingerichtet, bei Unterbrechung der Entnahme des Kältemittels aus dem Behälter oder der Befüllung des Behälters mit Kältemittel eine entnommene oder eingefüllte Kältemittelmenge zu speichern und bei einer Fortsetzung der Entnahme oder Befüllung, insbesondere nach einem Austausch des Behälters, eine nach der Fortsetzung aus dem Behälter entnommene oder eingefüllte Menge des Kältemittels zur zuvor gespeicherten Kältemittelmenge zuzurechnen. Diese auch als Hold-Funktion bezeichnete Funktion ermöglicht einem Benutzer eine einfache, genaue und komfortable Befüllung der Anlage mit Kältemittel.

In einer weiteren möglichen Ausgestaltung des Messgeräts ist dieses hinsichtlich seiner Drucksensoren kalibrierbar und/oder mit einem Softwareupdate versehbar.

Ein Softwareupdate kann beispielsweise über eine Speicherkarte, z. B. eine SD-Karte, eine Kabelverbindung zu einem externen Computergerät, z. B. eine USB-Kabelverbindung, einen physischen Datenspeicher, beispielsweise einen USB-Datenspeicher, und/oder eine Funkverbindung eingespielt werden.

Die Kalibrierung eines Drucksensors erfolgt für Relativdrucksensoren beispielsweise entweder über eine Korrektur eines Nullpunktsignals bei Beaufschlagung des Sensors mit Umgebungsdruck oder über eine Zwei-Punkt Kalibrierung für Relativ-, Absolutdruck- und Vakuumsensoren. Außerdem kann eine Sensorkalibrierung durch Kennlinienabgleich durch den Hersteller durchgeführt werden.

Kalibrierdaten können im Servicegerät abgespeichert werden, wobei das Servicegerät die Kalibrierdaten dann eindeutig und dauerhaft dem Drucksensor zuordnet, und/oder in einem internen Speicher des Drucksensors abgespeichert werden.

In einer weiteren möglichen Ausgestaltung des Messgeräts ist dieses dazu eingerichtet, über eine internetgestützte Verbindung mit einem externen Server verbunden zu werden. Auch der Informationsträger kann dazu eingerichtet sein, insbesondere in der Form eines tragbaren Computergeräts, über eine internetgestützte Verbindung mit einem externen Server verbunden zu werden.

Diese internetgestützte Verbindung kann über verschiedene Wege hergestellt werden, z.B. mittels
- einer Funkverbindung zu einem WLAN Router, LoRa,
- einer Mobilfunkverbindung zu einem Mobilfunkmasten oder
- einer drahtgebundenen Verbindung zu einem Router.

Darüber hinaus kann der Informationsträger in Form eines tragbaren Computergeräts auch über eine kabelgebundene Verbindung mit einem weiteren Computergerät, z. B. einem Laptop oder Desktop-PC, verbunden sein. Das weitere Computergerät steht dann in internetgestützter Verbindung mit dem Server.

Somit ermöglicht das Messgerät Funktionalitäten für eine Übertragung und Nutzung von servergestützten Daten zu einer Anwendung, die im Rahmen einer Software verwertet werden kann.

In einer darauf aufbauenden weiteren möglichen Ausgestaltung des Messgeräts ist es möglich, zwischen dem externen Server, weiteren Computergeräten sowie dem Servicegerät und/oder dem Informationsträger Protokolle und/oder Kenndaten für Klimaanlagen und/oder Kunden auszutauschen, wobei Protokolle und/oder Kenndaten für Klimaanlagen und/oder Kunden auf dem Server abgelegt oder aufgerufen werden. Diese Daten und/oder Protokolle können unter anderem beinhalten:
- eine Kennung einer Klimaanlage,
- Datumsinformationen über die Inbetriebnahme und/oder eine letzte Wartung einer Klimaanlage,
- Messdatenprotokolle aus einer Inbetriebnahme und/oder Wartung einer Klimaanlage mit dem Servicegerät, wobei die Messdaten beispielsweise
Temperaturen, Drücke oder erreichte Haltezeiten für ein Vakuum, aber auch feste Anlagendaten wie Kühlleistung, Kompressorleistung, Betriebsstunden, Fehlerzustände, Fehlerarten, Kundenfeedback, Gesamtstromaufnahme, Volumen, Kältemittel und andere besondere Gegebenheiten umfassen können,
- Informationen über einen nächsten Termin für eine Wartung an einer Klimaanlage und/oder
- Standortinformationen einer Klimaanlage.

Unter weiteren Computergeräten werden in diesem Zusammenhang Computergeräte wie Laptops, Desktop-PCs und andere tragbare oder ortsfeste Computergeräte verstanden, die dazu eingerichtet sind, eine internetgestützte Verbindung zu dem Server herzustellen.

Somit können auch feste, spezifische Anlagendaten, wie beispielsweise ein verwendetes Kältemittel oder das Volumen einer Anlage, mit Servicedaten verknüpfbar über webbasierende Anwendungen für den Benutzer des Geräts, aber auch für den Endkunden oder zukünftige Serviceintervalle zur Langzeitbetrachtung bereitgestellt werden.

In einer weiteren möglichen Ausgestaltung des Messgeräts ist dieses dazu eingerichtet, mit Hilfe eines satellitenbasierten Positionierungssystems seine Position zu bestimmen. Auch der Informationsträger, insbesondere in Form eines tragbaren Computergeräts, kann dazu eingerichtet sein, mit Hilfe eines satellitenbasierten Positionierungssystems seine Position zu bestimmen.

Kombiniert mit Daten über den Standort von Klimaanlagen, die das Servicegerät und/oder der Informationsträger über eine internetgestützte Verbindung von einem Server abrufen, kann aus dieser Position ermittelt werden, welche Klimaanlage sich in der Nähe befinden. Zu den nächsten Klimaanlagen können Daten abgerufen und über den Informationsträger angezeigt werden.

In einer weiteren möglichen Ausgestaltung des Messgeräts ist dieses dazu eingerichtet, eine maschinenlesbare Kennzeichnung, die an der Klimaanlage angebracht ist, einzulesen und anhand der eingelesenen maschinenlesbaren Kennzeichnung die Klimaanlage zu identifizieren und/oder aus der eingelesenen maschinenlesbaren Kennzeichnung Daten über die Klimaanlage zu gewinnen.

Mit maschinenlesbarer Kennzeichnung ist in diesem Zusammenhang beispielsweise eine Kennzeichnung in Form eines grafischen Symbols, eines Strichcodes (auch Barcodes), eines zweidimensionalen Codes (z. B. QR-Code, Datamatrix-Code) oder eines berührungslos auslesbaren Chips (z. B. RFID-Etikett, NFC-Chip/-Token) gemeint.

In einer weiteren möglichen Ausgestaltung des Messgeräts ist dieses dazu eingerichtet, eine Funkverbindung mit einer Klimaanlage aufzubauen, wenn diese Klimaanlage über eine Klimaanlagen-Steuer- und/oder Kommunikationseinheit verfügt, die mit einem Funkmodul ausgestattet ist. Über diese Funkverbindung können Daten über die Klimaanlage und/oder Protokolle an das Servicegerät und/oder den Informationsträger übertragen werden, die zuvor in der Klimaanlagen-Steuer- und/oder Kommunikationseinheit abgelegt wurden.

In einer weiteren möglichen Ausgestaltung des Messgeräts ist dieses dazu eingerichtet, Protokolle, insbesondere Messprotokolle von mit dem Servicegerät verbundenen drahtlosen und/oder kabelgebundenen Sensoren, sowie Kenndaten für spezifische Anlagen und Kunden über eine internetgestützte Verbindung in externen Servern abzulegen und/oder aufzurufen. Die internetgestützte Verbindung kann beispielsweise über Mobilfunk, eine Verbindung gemäß dem Standard der IEEE-802.11-Familie, beispielsweise Wireless-LAN, oder LAN hergestellt werden. Die auf den externen Servern abgelegten Protokolle und Daten können vom Monteur auch mit Hilfe eines tragbaren Computergeräts oder eines stationären Computers abgerufen werden. Das Servicegerät kann von den externen Servern aufgerufene Protokolle und Daten dazu nutzen, den Monteur intelligent bei der Wartung und/oder Inbetriebnahme zu unterstützen, indem es z. B. Messprotokolle von vergangenen Wartungseinsätzen über den Informationsträger visualisiert und den Ergebnissen der aktuellen Wartung gegenüberstellt oder Kenndaten der Klimaanlage, wie etwa die optimale Füllmenge an Kältemittel und die Art des zuletzt eingefüllten Kältemittels verarbeitet und/oder über den Informationsträger visualisiert.

Weiterhin können diese Daten auch über ein Portal dem Endkunden zur Verfügung oder Einsicht gebracht werden, so kann z. B. für ein Hotel oder eine Firma eine Übersicht über alle Klimageräte mit einem jeweiligen "Health-Status" geschaffen werden, welcher z. B. folgende Parameter anzeigt: Lufttemperatur, Kühlleistung, Zyklen, On/Off Zustand, Wartungszyklen und/oder über die Verrechnung oben genannter Daten eine Empfehlung über einen nächsten Servicezeitpunkt, oder eine Vorschlagsliste für eine sinnvolle Reihenfolge für einen Besuch eines nächsten Servicetechnikers. Über dieses Portal kann der Servicetechniker auch alle Protokolle, gegebenenfalls auch Abrechnungen und andere Daten zur Verfügung stellen.

In einer weiteren möglichen Ausgestaltung des Messgeräts umfasst dieses zur Sicherung als Diebstahlschutz eine absperrbare Vorrichtung oder es sind Ösen in das Gehäuse des Mess- oder Servicegeräts integriert, durch die das Mess- oder Servicegerät mit einem Schloss gesichert werden kann.

In einer weiteren möglichen Ausgestaltung des Messgeräts ist dieses zumindest mit zwei oder zumindest mit vier drahtlosen und/oder kabelgebundenen Temperatursensoren und zumindest mit einem oder zumindest mit zwei externen drahtlosen und/oder kabelgebundenen Drucksensoren verbindbar und das Mess- oder Servicegerät empfängt und verarbeitet die Messdaten all dieser Sensoren gleichzeitig oder nacheinander.

Weiterhin greift das Servicegerät beispielsweise auf kältemittelspezifische Hilfstabellen zu, die im Datenspeicher des Servicegeräts abgelegt sind. Beispielsweise auf Anforderung durch den Monteur verarbeitet das Servicegerät die empfangenen Sensordaten und berechnet daraus unter Verwendung der kältemittelspezifischen Hilfstabellen einen Wirkungsgrad einer Klimaanlage und gibt diesen über den Informationsträger aus.

Unter kältemittelspezifischen Hilfstabellen werden insbesondere Tabellen verstanden, welche zumindest nach Druck und Temperatur aufgeteilte spezifische Enthalpie-Werte des Kältemittels umfassen.

Mittels des Messgeräts wird die Wartung und Inbetriebnahme von Klimaanlagen erleichtert und/oder verbessert, indem eine mehrere Teilschritte einer Inbetriebnahme und/oder Wartung einer Klimaanlage durch neue Verfahren verbessert werden, bei denen das Mess- oder Servicegerät zum Einsatz kommt. Solche Teilschritte sind z. B. eine Überprüfung einer Dichtheit der Klimaanlage, eine Temperaturmessung an der Klimaanlage sowie eine Ermittlung eines Wirkungsgrads der Klimaanlage.

In einem möglichen Verfahren zur Inbetriebnahme und/oder Wartung einer Klimaanlage mit dem Servicegerät wird die Dichtheitsprüfung der Klimaanlage durch die Ausführung folgender Schritte verbessert:
- Verbindung des HP Teils der Klimaanlage mit dem HP-Anschluss des Servicegeräts und Verbindung des LP Teils der Anlage mit dem LP-Anschluss des Servicegeräts,
- Öffnung der beiden Sperrventile am Servicegerät und Evakuierung der Klimaanlage mit einer Vakuumpumpe, bis ein von der Leistung der Pumpe abhängiger niedrigster Druck erreicht ist,
- Abschalten der Pumpe, schließen der Sperrventile am Servicegerät und Aufzeichnung des Druckanstiegs aufgrund von Leckagen in der Klimaanlage mit Hilfe der internen Sensoren des Servicegeräts oder mit Hilfe von kabelgebundenen und/oder drahtlos mit dem Servicegerät verbundenen Drucksensoren für eine bestimmte Zeitspanne t1,
- Extrapolation der über die Zeitspanne t1 aufgenommenen Messdaten,

um entweder eine Zeitspanne t2 zu bestimmen, nach der ein bestimmter Druckgrenzwert aufgrund von Leckagen in der Klimaanlage voraussichtlich erreicht wird und Ausgabe dieser Zeitspanne über den Informationsträger oder
um einen Druckgrenzwert auszugeben, welcher nach einer festen Zeit t3, die größer als die Zeitspanne t1 ist, voraussichtlich aufgrund von Leckagen in der Klimaanlage erreicht wird,
oder Berechnung und Ausgabe einer Leckagerate auf Basis der über die Zeitspanne t1 aufgenommenen Messdaten.

Dieses Verfahren bringt dem Monteur den Vorteil, dass die Prüfung in kurzer Zeit durchgeführt werden kann und der Monteur entweder die ermittelte Zeit t2 oder den ermittelten Druckgrenzwert zum Zeitpunkt t3 als Richtwert heranziehen kann, um zu entscheiden, wann die nächste Wartung der Anlage spätestens durchgeführt werden sollte.

Eine Leckagerate kann als wichtiger Kennwert der Anlage analysiert werden, um zu entscheiden, ob die Anlage betrieben werden darf. Damit das Servicegerät eine absolute Leckagerate ermitteln kann, muss vom Monteur ein Kennwert für das interne Volumen der Klimaanlage eingegeben werden.

In einem weiteren möglichen Verfahren zur Inbetriebnahme und/oder Wartung einer Klimaanlage mit dem Servicegerät wird die Dichtheitsprüfung der Klimaanlage durch die Ausführung folgender Schritte verbessert:
- Verbindung des HP Teils der Anlage mit dem HP-Anschluss des Servicegeräts und Verbindung des LP Teils der Anlage mit dem LP-Anschluss des Servicegeräts,
- Beaufschlagung der Klimaanlage mit einem Druck aus einer Druckquelle, der über dem Umgebungsluftdruck liegt,
- Trennung der Verbindung zur Druckquelle und Aufzeichnung des Druckabfalls aufgrund von Leckagen in der Klimaanlage mit Hilfe der internen Sensoren des Servicegeräts oder mit Hilfe von kabelgebundenen und/oder drahtlos mit dem Servicegerät verbundenen Drucksensoren für eine bestimmte Zeitspanne t1,
- Extrapolation der über die Zeitspanne t1 aufgenommenen Messdaten,

um entweder eine Zeitspanne t2 zu bestimmen, nach der ein bestimmter Druckgrenzwert aufgrund von Leckagen in der Klimaanlage erreicht wird, und Ausgabe dieser Zeitspanne über den Informationsträger, oder
um einen Druckgrenzwert auszugeben, welcher in einer festen Zeit t3 voraussichtlich aufgrund von Leckagen in der Klimaanlage erreicht wird,
oder Berechnung und Ausgabe einer Leckagerate auf Basis der über die Zeitspanne t1 aufgenommenen Messdaten.

Wie auch das zuvor beschriebene Dichtheitsprüfverfahren mit Vakuum bringt auch dieses Dichtheitsprüfverfahren mit Überdruck dem Monteur den Vorteil, dass die Prüfung in kurzer Zeit durchgeführt werden kann, und der Monteur entweder die ermittelte Zeit t2 oder den ermittelten Druckgrenzwert zum Zeitpunkt t3 als Richtwert heranziehen kann, um zu entscheiden, wann die nächste Wartung der Anlage spätestens durchgeführt werden sollte.

Die Extrapolation der Messdaten und die Berechnung bestimmter Kennwerte in beiden Verfahren zur Dichtheitsprüfung können dabei direkt durch das Mess- oder Servicegerät oder den Informationsträger durchgeführt werden.

In einem weiteren möglichen Verfahren zur Inbetriebnahme und/ oder Wartung einer Klimaanlage mit dem Servicegerät wird die Temperaturmessung an Rohrleitungen der Klimaanlage durch die Ausführung folgender Schritte verbessert:
- Verbindung von mindestens einem kabelgebundenen oder drahtlosen Temperatursensor mit dem Servicegerät,
- Herstellung von thermischem Kontakt des mindestens einen Temperatursensors mit einer Rohrleitung der Klimaanlage zur Ermittlung der Temperatur an einer Oberfläche der Rohrleitung,
- Verbindung von zumindest einem weiteren kabelgebundenen oder drahtlosen Temperatursensor mit dem Servicegerät zur Ermittlung einer Umgebungstemperatur oder Ermittlung einer Umgebungstemperatur durch einen im Servicegerät integrierten Temperatursensor,
- Verwendung der gemessenen Oberflächentemperatur der Rohrleitung und der gemessenen Umgebungstemperatur durch das Servicegerät, um eine Real-Temperatur des Kältemittels in der Rohrleitung zu berechnen und über den Informationsträger auszugeben.

Dieses verbesserte Verfahren zur Temperaturmessung bringt dem Monteur den Vorteil, dass ein Temperaturmessfehler aufgrund eines Temperaturgradienten zwischen einer Innenseite einer Rohrleitung, die in thermischem Kontakt zum Kältemittel steht, und einer Außenseite der Rohrleitung, die in thermischer Verbindung mit der Umgebungsluft steht, eliminiert werden kann und dadurch eine tatsächliche Real-Temperatur des Kältemittels in der Klimaanlage genauer bestimmt werden kann.

Für die Berechnung der Real-Temperatur des Kältemittels in der Rohrleitung verwendet das Servicegerät in dem beschriebenen Verfahren beispielsweise vordefinierte Materialeigenschaften und Geometriedaten für die Rohrleitung, die branchenüblichen Standardwerten entsprechen.

In einem darauf aufbauenden möglichen Verfahren zur Inbetriebnahme und/oder Wartung einer Klimaanlage mit dem Servicegerät wird die Temperaturmessung an Rohrleitungen der Klimaanlage unter Verwendung der gemessenen Oberflächentemperatur der Rohrleitung und der gemessenen Umgebungstemperatur dadurch verbessert, dass durch den Monteur spezifische Materialeigenschaften und/oder Geometriedaten der Rohrleitung eingegeben werden können, so dass das Servicegerät eine Real-Temperatur des Kältemittels in der Rohrleitung unter Berücksichtigung dieser spezifischen Daten berechnet und über den Informationsträger ausgibt.

In einem weiteren möglichen Verfahren zur Inbetriebnahme und/oder Wartung einer Klimaanlage mit dem Servicegerät wird die Ermittlung eines Wirkungsgrades der Klimaanlage durch die Ausführung folgender Schritte verbessert:
- Installation der zumindest zwei, oder zumindest vier mit dem Servicegerät verbundenen Temperatursensoren und des zumindest einen, oder der zumindest zwei mit dem Servicegerät verbundenen externen Drucksensoren an der Klimaanlage und Verbindung der internen Drucksensoren des Servicegeräts mit der Klimaanlage derart, dass mindestens zwei der folgenden vier Temperatur- & Druckwertepaare gemessenen werden:
   a) Temperatur und Druck vor dem Expansionsventil
   b) Temperatur und Druck nach dem Expansionsventil
   c) Temperatur und Druck von dem Verdampfer
   d) Temperatur und Druck nach dem Verdampfer
   e) Temperatur und Druck vor dem Kompressor
   f) Temperatur und Druck nach dem Kompressor
   und Zuordnung entsprechender Funktionen zu den jeweiligen Sensoren,
   - Empfang und Verarbeitung der Messdaten aller verbundenen Sensoren durch das Servicegerät und Verwendung von kältemittelspezifischen Hilfstabellen zur Berechnung eines realen Wirkungsgrads der Klimaanlage nach Definition der Kennzahlen EER oder COP.

Mit der Zuordnung der entsprechenden Funktionen zu den jeweiligen Sensoren ist beispielsweise gemeint, dass der Monteur am Servicegerät oder dem Informationsträger konfiguriert, welcher Sensor an welcher Messposition installiert ist.

Beispielsweise wird hierzu dem Monteur zu jedem verbundenen Sensor über den Informationsträger eine Kennung oder Kennzeichnung des Sensors angezeigt, mit der oder mit dem der Monteur zweifelsfrei zuordnen kann, zu welchem Sensor er am Servicegerät die gewählte Funktion, also die gewählte Messposition, eingeben soll. Dies wird für alle verbundenen Sensoren durchgeführt.

### KURZBESCHREIBUNG DER ZEICHNUNGEN

Ausführungsbeispiele der Erfindung werden im Folgenden anhand von Zeichnungen näher erläutert.

Dabei zeigen:
- Fig. 1A: schematisch ein System zur Durchführung von Messaufgaben und zur Verwaltung von Messdaten,
- Fig. 1B: schematisch eine Anordnung eines Messgeräts, einer Anlage und einer Pumpe,
- Fig. 1C: schematisch eine mögliche Ausgestaltungsform eines intelligenten Servicegeräts bei der Inbetriebnahme oder Wartung einer Klimaanlage,
- Fig. 1D: schematisch eine Anordnung eines Servicegeräts, einer Klimaanlage und eines Cloud-Servers bei der Inbetriebnahme oder Wartung einer Klimaanlage,
- Fig. 2: schematisch eine weitere mögliche Ausgestaltungsform des intelligenten Servicegeräts bei der Inbetriebnahme oder Wartung einer Klimaanlage,
- Fig. 3A: schematisch eine mögliche Ausgestaltung des intelligenten Servicegeräts sowie externe drahtlose Sensoren,
- Fig. 3B: schematisch eine mögliche Ausgestaltung des intelligenten Servicegeräts sowie externe drahtlose und kabelgebundene Sensoren,
- Fig. 4A: schematisch eine weitere mögliche Ausgestaltung des intelligenten Servicegeräts sowie externe drahtlose Sensoren
- Fig. 4B: schematisch eine weitere mögliche Ausgestaltung des intelligenten Servicegeräts sowie externe drahtlose und kabelgebundene Sensoren,
- Fig. 5A bis 5D: schematisch vier mögliche Ausgestaltungsformen einer Verbindung zwischen einem Gehäuse und einem drahtlosen Temperatursensor zum Aufladen des Stromspeichers des Temperatursensors,
- Fig. 6A: schematisch eine mögliche Ausgestaltungsform des intelligenten Servicegeräts mit einer Waage und einem mit der Waage verbundenen, kabelgebundenen elektrischen Schaltventils,
- Fig. 6B: schematisch eine mögliche Ausgestaltungsform des intelligenten Servicegeräts mit einer Waage und einem drahtlosen elektrischen Schaltventils,
- Fig. 7A: schematisch eine Rohrleitung für ein Kältemittel im Querschnitt mit einem in thermischem Kontakt stehenden Temperatursensor,
- Fig. 7B: schematisch einen qualitativen radialen Temperaturverlauf von der Mitte einer Rohrleitung bis über die Außenfläche einer Rohrleitung hinaus,
- Fig. 8A: schematisch eine Kommunikationsanordnung, in der eine Ausgestaltungsform des intelligenten Servicegeräts über einen WLAN Router und eine internetgestützte Verbindung mit einem Server verbunden wird,
- Fig. 8B: schematisch eine Kommunikationsanordnung, in der eine Ausgestaltungsform des intelligenten Servicegeräts über eine Mobilfunkverbindung zu einem Mobilfunkmast und eine internetgestützte Verbindung mit einem Server verbunden wird,
- Fig. 8C: schematisch eine Kommunikationsanordnung, in der eine Ausgestaltungsform des intelligenten Servicegeräts kabelgebunden über einen Router und eine internetgestützte Verbindung mit einem Server verbunden wird,
- Fig. 9A: schematisch eine Kommunikationsanordnung, in der eine Ausgestaltungsform des intelligenten Servicegeräts über ein tragbares Computergerät und über einen WLAN Router und eine internetgestützte Verbindung mit einem Server verbunden wird,
- Fig. 9B: schematisch eine Kommunikationsanordnung, in der eine Ausgestaltungsform des intelligenten Servicegeräts über ein tragbares Computergerät und über eine Mobilfunkverbindung zu einem Mobilfunkmast und eine internetgestützte Verbindung mit einem Server verbunden wird,
- Fig. 9C: schematisch eine Kommunikationsanordnung, in der eine Ausgestaltungsform des intelligenten Servicegeräts über ein tragbares Computergerät und kabelgebunden über einen Router und eine internetgestützte Verbindung mit einem Server verbunden wird und
- Fig. 10: schematisch eine mögliche Ausgestaltungsform des intelligenten Servicegeräts sowie ein tragbares Computergerät als Informationsträger im Zentrum einer Kommunikationsanordnung.

Einander entsprechende Teile sind in allen Figuren mit den gleichen Bezugszeichen versehen.

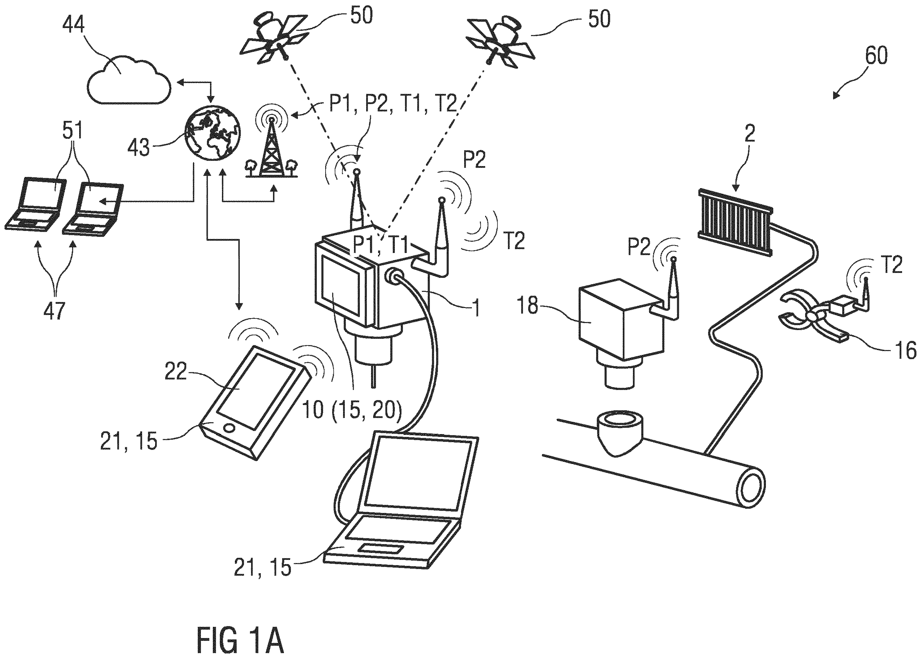

In Figur 1A ist ein System 60 zur Durchführung von Messaufgaben und zur Verwaltung von Messdaten dargestellt.

Das System 60 umfasst ein Messgerät 1, im Folgenden auch als Servicegerät 1 bezeichnet, welches in den folgenden Figuren anhand verschiedener Ausführungsbeispiele beispielhaft näher beschrieben ist.

Das Messgerät 1 ist mit einer Anlage oder einer Klimaanlage 2 gekoppelt und umfasst interne Sensoren zur Erfassung eines Drucks P1 und einer Temperatur T1 eines in der Anlage geführten Mediums oder in der Klimaanlage 2 geführten Kältemittels.

Das Messgerät 1 umfasst einen Informationsträger 15 mit einer Bildschirmeinheit 20. Das Messgerät 1 kann außerdem mit einem als tragbares Computergerät 21 ausgebildeten Informationsträger 15 gekoppelt sein, welcher einen Bildschirm 22 umfasst.

Der Informationsträger 15 ist dazu konfiguriert, bei gleichzeitiger Verfügbarkeit von kabelgebundenen oder kabellos verbundenen Sensoren, vorliegend beispielsweise einem externen, drahtlosen Drucksensor 18 und einem externen, drahtlosen Temperatursensor 16, entweder die Daten der kabelgebundenen oder die Daten der kabellos verbundenen Sensoren mit Vorrang bereitzustellen und zu visualisieren.

Mittels des drahtlosen Drucksensors 18 wird ein zweiter Druck P2 ermittelt. Mittels des drahtlosen Temperatursensors 18 wird eine zweite Temperatur T2 ermittelt. Der Druck P2 und die Temperatur T2 werden über eine drahtlose Verbindung vom externen Drucksensor 18 bzw. von externen Temperatursensor 16 an den Informationsträger 15 übermittelt.

Weiterhin ist der Informationsträger 15 eingerichtet, verfügbare Sensoren anzuzeigen, wobei bei Verlust einer Datenverbindung zu einem kabelgebundenen Sensor dem Messgerät 1 automatisch ein kabellos verbindbarer Sensor zugeordnet wird.

Ferner ist der Informationsträger 15 ausgebildet, Messdaten von einem externen kabelgebundenen oder kabellos verbundenen Sensor mit Vorrang gegenüber Messdaten von dem internen Sensor zu verwenden oder zu visualisieren.

Dabei erkennt der Informationsträger 15 einem externen Sensor aufgrund eines vom externen Sensor übertragenen Kennungssignals und/oder eines vom externen Sensor übertragenen Messbereichs und/oder ordnet den vom externen Sensor übertragenen Messsignale eine Niederdruck-Anzeigefunktion oder eine Hochdruck-Anzeigefunktion oder eine Unterdruck-/Vakuum-Anzeigefunktion zu.

Hierbei werden die Daten von dem mit Vorrang behandelten Sensor vom Informationsträger 15 verarbeitet, analysiert und/oder auf dem Bildschirm 22 visualisiert, während die Daten des anderen Sensors nicht verarbeitet, analysiert und/oder nicht auf dem Bildschirm 22 visualisiert werden oder zumindest nicht zeitgleich verarbeitet, analysiert und/oder auf dem Bildschirm 22 visualisiert werden.

Das Messgerät 1 ist über eine internetgestützte Verbindung 43 mit einem Cloud-Server 44 verbunden.

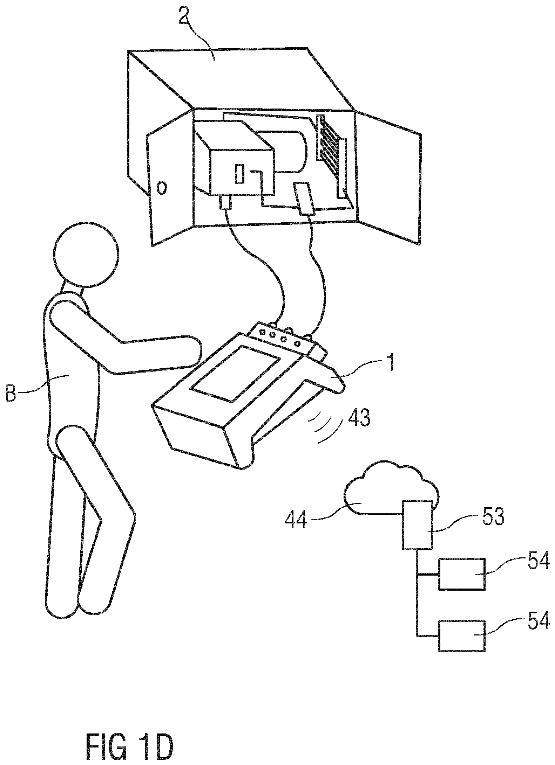

Der Cloud-Server 44 umfasst eine Cloud-Applikation und zumindest ein in Figur 1D näher dargestelltes Benutzerkonto 53 in der Cloud-Applikation. Das Messgerät 1 und/oder der Informationsträger 15 werden bzw. wird dem Benutzerkonto 53 zugeordnet.

Dabei stellt das Messgerät 1 Messdatenprotokolle mit den Drücken P1 und/oder P2 und den Temperaturen T1 und/oder T2 bereit, die dem Benutzerkonto 53 zugeordnet sind. Zusätzlich können das Messgerät 1 und/oder der Informationsträger 15 und/oder die Cloud-Applikation weitere in Figur 1D näher dargestellte Datensätze 54 mit den Messdatenprotokollen verknüpfen.

Das Computergerät 21 oder der Informationsträger 15 sind dem Benutzerkonto 53 zugeordnet, wobei das Messgerät 1 und/oder der Informationsträger 15 mit dem Computergerät 21 Messdatenprotokolle und/oder weitere Datensätze 54 austauschen, wobei zu diesem Austausch keine Datenverbindung zum Cloud-Server 44 erforderlich ist oder eine vorhandene Datenverbindung zum Cloud-Server 44 während des Austauschs unterbrochen wird.

Auf dem dem Benutzerkonto 53 zugeordneten Funktionsträger 15 oder auf dem dem Benutzerkonto 53 zugeordneten Computergerät 21 werden bestimmte Speicher- und Analysefunktionen beispielsweise erst nach einer Verknüpfung oder Erstanmeldung mit einem Benutzerkonto 53 auf dem Cloud-Server 44 aktiviert.

Beispielsweise werden bei einer Erstverknüpfung oder bei einem Verbindungsaufbau eine Identifikation des Messgeräts 1 mit einer Identifikation des Informationsträgers 15 und/oder des Computergeräts 21 und mit einem Benutzerkonto 53 auf dem Cloud-Server 44 gekoppelt, wobei hierfür als Anmeldekennung eine IMEI Nummer, eine Mobilfunknummer und/oder eine Emailadresse mit einem in Figur 1D näher dargestellten Benutzer B und einem Password gekoppelt werden oder wird.

Weiterhin sind dem Benutzerkonto 53 verschiedene Anlagen oder Klimaanlagen 2 zuordbar oder zugeordnet, wobei in dem Benutzerkonto 53 eine ID Nummer einer Anlage oder Klimaanlage 2 hinterlegt ist, unter welcher ein Datensatz 54 mit Messdaten einer Anlage oder Klimaanlage 2 ablegbar oder abgelegt ist.

Ferner ist dem Datensatz 54 einer Anlage oder Klimaanlage 2 eine GPS Position, ein Bild, ein Film oder eine Kundenreferenz zuordbar oder zugeordnet.

Weiterhin umfasst das System 60 ein satellitengestütztes Positionsbestimmungssystem 50. Sowohl die Klimaanlage 2 als auch der Informationsträger 15 können mit diesem satellitengestützten Positionsbestimmungssystem 50 verbunden sein und damit ihre Geo-Positionen ermitteln und gemeinsam mit den Datensätzen an den Cloud-Server 44 übertragen.

Auch können weitere Computergeräte 47 über die internetgestützte Verbindung 43 mit dem Cloud-Server 44 verbunden sein. Der Cloud-Server 44 stellt diesen Informationen, wie beispielsweise Anlagendaten und Messprotokolle 51 bereit, die von den Computergeräten 47 abgerufen und angezeigt werden können.

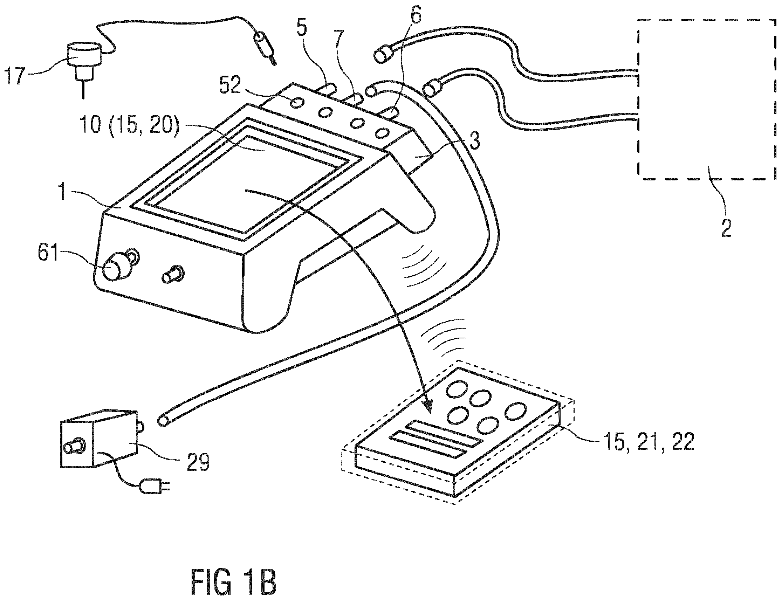

Figur 1B zeigt eine mögliche Anordnung eines Messgeräts 1 (Servicegeräts 1), einer Anlage 2 oder Klimaanlage 2 und einer Pumpe 29, welche mit dem Messgerät 1 koppelbar ist.

Weiterhin ist ein Drucksensor 19 dargestellt, welcher kabelgebunden mit dem Messgerät 1 über einen messgeräteigenen Anschluss 52 koppelbar ist. Der Anschluss 52 kann auch als Medienbuchse ausgebildet sein, beispielsweise für Strom und Spannung.

Das Messgerät 1 umfasst ein Gehäuse 3, einen Hochdruck-/HP-Anschluss 5, einen Niederdruck-/LP-Anschluss 6 und einen Serviceanschluss 7 sowie eine elektronische Steuereinheit 10 und/oder gegebenenfalls ein tragbares Computergerät 21 mit einem Bildschirm 22 als weiteren Informationsträger 15.

Eine Schlauchverbindung verbindet den Hochdruck-/HP-Anschluss 5 mit dem HP-Teil der Anlage 2.

Eine weitere Schlauchverbindung verbindet den Niederdruck-/LP-Anschluss 6 mit dem LP-Teil der Anlage 2.

Mittels einer weiteren Schlauchverbindung kann der Serviceanschluss 7 mit einem Eingang der Pumpe 29 verbunden werden.

Das Messgerät 1 kann weiterhin eine Druckerzeugungseinrichtung 61 umfassen, welche beispielsweise durch eine handbetätigte Pumpe oder eine elektrische Pumpe realisiert ist.

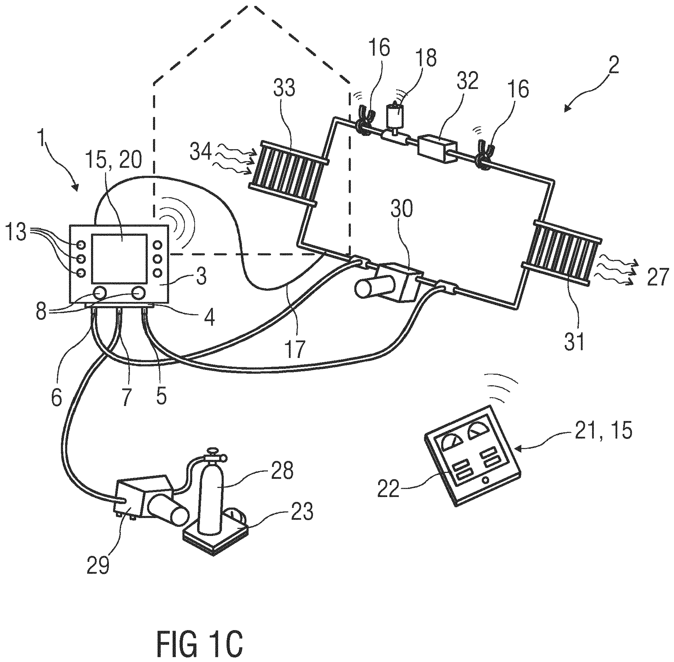

In Figur 1C ist eine mögliche Ausgestaltungsform eines intelligenten Servicegeräts 1 bei einer Wartung oder Inbetriebnahme einer Klimaanlage 2 dargestellt.

Das Servicegerät 1 ist mit einem Gehäuse 3, einem Ventilblock 4, einem Hochdruck-/HP-Anschluss 5, einem Niederdruck-/LP-Anschluss 6, einem Serviceanschluss 7, zwei Sperrventilen 8, mehreren Knöpfen als Bedieneinrichtung 13, einer Bildschirmeinheit 20 als Informationsträger 15, einem tragbaren Computergerät 21 mit einem Bildschirm 22 als weiteren Informationsträger 15, zwei externen, drahtlosen Temperatursensoren 16, einem externen, drahtlosen Drucksensor 18, einem kabelgebundenen Drucksensor 19 sowie drei angeschlossenen Schlauchverbindungen gezeigt.

Eine Schlauchverbindung verbindet den Hochdruck-/HP-Anschluss 5 mit dem HP-Teil der Klimaanlage 2, indem sie an eine Verrohrung am Ausgang eines Kompressors 30 angeschlossen ist.

Eine weitere Schlauchverbindung verbindet den Niederdruck-/LP-Anschluss 6 mit dem LP-Teil der Klimaanlage 2, indem sie an die Verrohrung am Eingang des Kompressors 30 angeschlossen ist.

Eine weitere Schlauchverbindung verbindet den Serviceanschluss 7 mit einem Eingang einer Pumpe 29, die wiederum mit einer Druckgasflasche 28 verbunden ist, wobei die Druckgasflasche 28 auf einer Waage 23 steht.

Die Klimaanlage 2 ist durch die Hauptkomponenten Kompressor 30, Verflüssiger/Kondensator 31, Expansionsventil 32 und Verdampfer 33 dargestellt. Im Verflüssiger/Kondensator 31 gibt ein Kühlmittel Wärmeenergie ab (= Wärmeabgabe 27), im Verdampfer 33 nimmt es Wärmeenergie auf (= Wärmeaufnahme 34).

Figur 1D zeigt eine Anordnung eines Messgeräts 1 (Servicegeräts 1), einer Klimaanlage 2 und eines Cloud-Servers bei der Inbetriebnahme oder Wartung einer Klimaanlage 2.

Das Messgerät 1 ist über die internetgestützte Verbindung 43 mit dem Cloud-Server 44 verbunden.

Der Cloud-Server 44 umfasst die Cloud-Applikation und zumindest ein Benutzerkonto 53 in der Cloud-Applikation. Das Messgerät 1 und/oder der Informationsträger 15 sind dem Benutzerkonto 53 zugeordnet.

Dabei stellt das Messgerät 1 Messdatenprotokolle in als Datensätzen 54 bereit, die dem Benutzerkonto 53 zugeordnet sind. Zusätzlich können das Messgerät 1 und/oder der Informationsträger 15 und/oder die Cloud-Applikation weitere Datensätze 54 mit den Messdatenprotokollen verknüpfen.

Dem Benutzerkonto 53 sind beispielsweise verschiedene Anlagen oder Klimaanlagen 2 zuordbar oder zugeordnet, wobei in dem Benutzerkonto 53 eine ID Nummer einer Anlage oder Klimaanlage 2 hinterlegt ist, unter welcher ein Datensatz 54 mit Messdaten einer Anlage oder Klimaanlage 2 ablegbar oder abgelegt ist.

Ferner ist dem Datensatz 54 einer Anlage oder Klimaanlage 2 eine GPS Position, ein Bild, ein Film oder eine Kundenreferenz zuordbar oder zugeordnet.

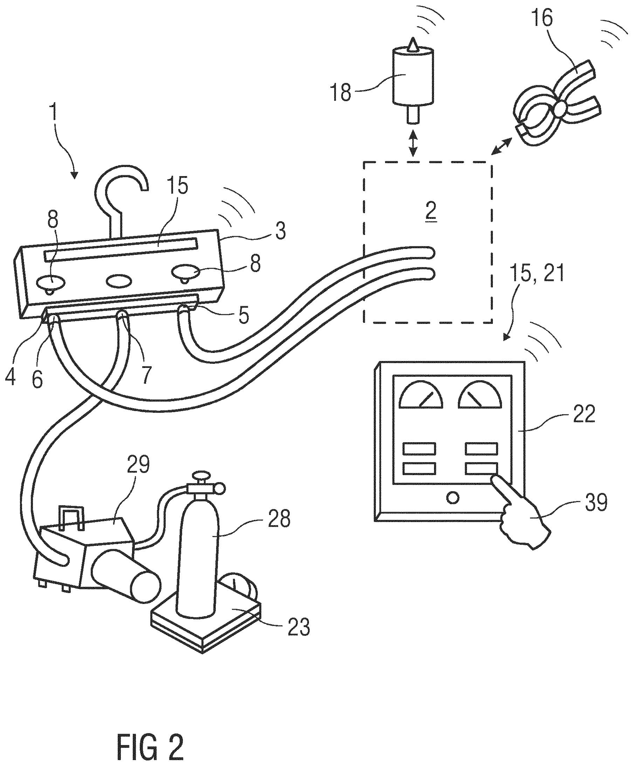

In Figur 2 ist eine weitere Ausgestaltungsform des intelligenten Servicegeräts 1 bei der Wartung oder Inbetriebnahme einer Klimaanlage 2 dargestellt.

Das Servicegerät 1 ist mit einem Gehäuse 3, einem Ventilblock 4, einem Hochdruck-/HP-Anschluss 5, einem Niederdruck-/LP-Anschluss 6, einem Serviceanschluss 7, zwei Sperrventilen 8, einem Informationsträger 15, einem tragbaren Computergerät 21 mit einem Bildschirm 22 als weiteren Informationsträger 15, einem externen, drahtlosen Temperatursensor 16, einem externen, drahtlosen Drucksensor 18 sowie drei angeschlossenen Schlauchverbindungen gezeigt.

Eine Schlauchverbindung verbindet den Hochdruck-/HP-Anschluss 5 mit dem HP-Teil der Klimaanlage 2.

Eine weitere Schlauchverbindung verbindet den Niederdruck-/LP-Anschluss 6 mit dem LP-Teil der Klimaanlage 2.

Eine weitere Schlauchverbindung verbindet den Serviceanschluss 7 mit dem Eingang einer Pumpe 29, die wiederum mit einer Druckgasflasche 28 verbunden ist, wobei die Druckgasflasche 28 auf einer Waage 23 steht.

Die Klimaanlage 2 ist schematisch durch einen gestrichelten Rahmen angedeutet. Am tragbaren Computergerät 21 ist schematisch eine Bedienereingabe durch Berührung 39 angedeutet.

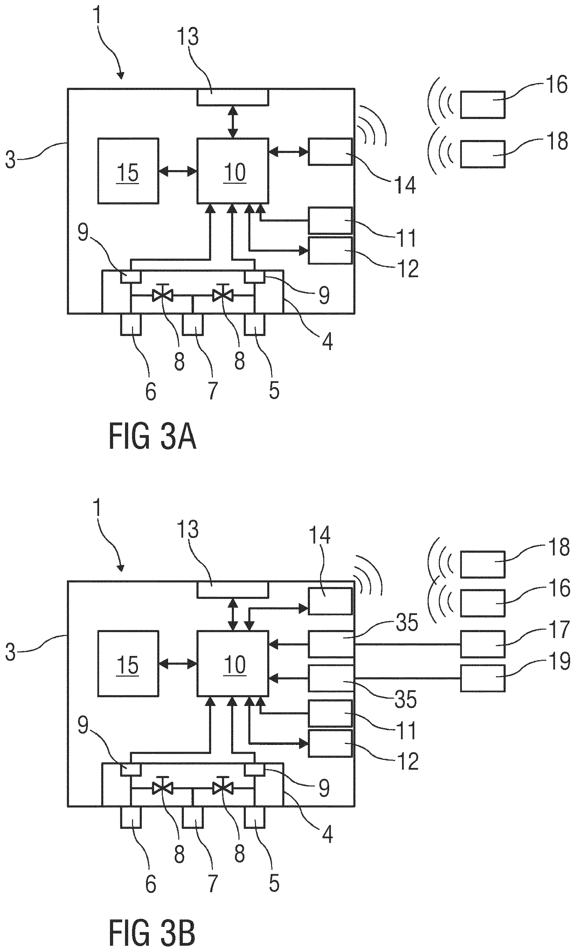

In Figur 3A ist schematisch eine mögliche Ausgestaltung des intelligenten Servicegeräts 1 dargestellt.

Das Servicegerät 1 ist mit einem Gehäuse 3, einem Ventilblock 4, einem Hochdruck-/HP-Anschluss 5, einem Niederdruck-/LP-Anschluss 6, einem Serviceanschluss 7, zwei Sperrventilen 8, zwei internen Drucksensoren 9, einer elektronischen Steuereinheit 10, einem Hauptstromspeicher 11, einem Datenspeicher 12, einer Bedieneinrichtung 13, einem Funkmodul 14, einem Informationsträger 15, einem externen, drahtlosen Temperatursensor 16 und einem externen, drahtlosen Drucksensor 18 gezeigt. Das Servicegerät 1 steht mit den gezeigten drahtlosen Sensoren 16, 18 über sein Funkmodul 14 in Funkverbindung.

In Figur 3B ist schematisch eine weitere mögliche Ausgestaltung des intelligenten Servicegeräts 1dargestellt.

Zusätzlich zu den bereits in Figur 3A gezeigten Komponenten ist das Servicegerät 1 in Figur 3B mit zwei Kabelanschlüssen 35, einem kabelgebundenen Temperatursensor 17 und einem kabelgebundenen Drucksensor 19 dargestellt.

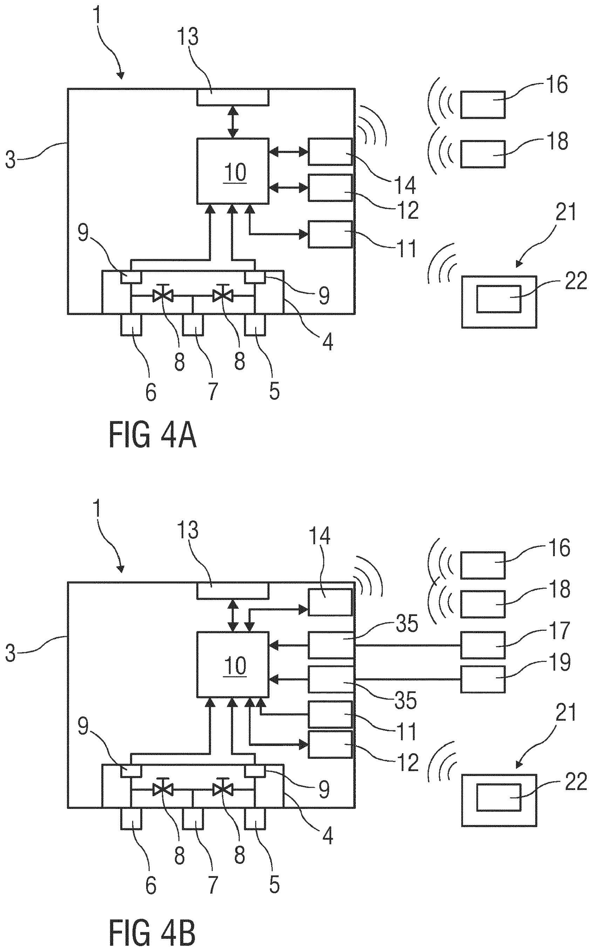

In Figur 4A ist schematisch eine weitere mögliche Ausgestaltung des intelligenten Servicegeräts 1dargestellt.

Das Servicegerät 1 ist mit einem Gehäuse 3, einem Ventilblock 4, einem Hochdruck-/HP-Anschluss 5, einem Niederdruck-/LP-Anschluss 6, einem Serviceanschluss 7, zwei Sperrventilen 8, zwei internen Drucksensoren 9, einer elektronischen Steuereinheit 10, einem Hauptstromspeicher 11, einem Datenspeicher 12, einer Bedieneinrichtung 13, einem Funkmodul 14, einem externen, drahtlosen Temperatursensor 16, einem externen, drahtlosen Drucksensor 18 und mit einem externen, tragbaren Computergerät 21 mit einem Bildschirm 22 gezeigt. Das Servicegerät 1 steht mit den gezeigten drahtlosen Sensoren 16, 18 sowie mit dem tragbaren Computergerät 21 über sein Funkmodul 14 in Funkverbindung.

In Figur 4B ist schematisch eine weitere mögliche Ausgestaltung des intelligenten Servicegeräts 1 dargestellt.

Zusätzlich zu den bereits in Figur 4A gezeigten Komponenten ist das Servicegerät 1 in Figur° 4B mit zwei Kabelanschlüssen 35, einem kabelgebundenen Temperatursensor 17 und einem kabelgebundenen Drucksensor 19 dargestellt.

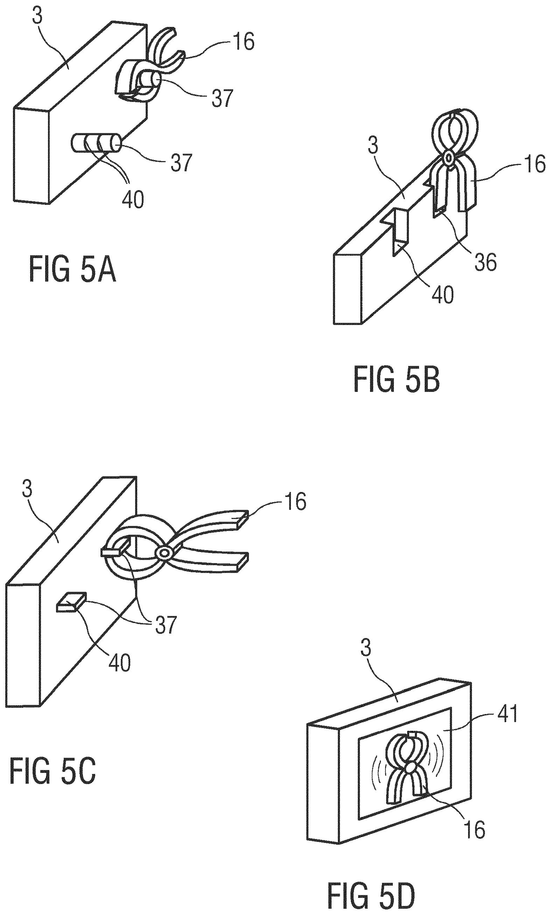

In den Figuren 5A bis 5D sind vier Möglichkeiten gezeigt, wie ein externer, drahtloser Temperatursensor 16 mit einem Gehäuse 3 beispielsweise verbunden werden kann, so dass ein interner Stromspeicher des drahtlosen Temperatursensors 16 mit elektrischen Ladekontakten 40 am Gehäuse 3 verbunden ist und darüber geladen werden kann.

In Figur 5A ist das Gehäuse 3 mit zylinder- oder kegelförmigen Auswölbungen 37 gezeigt, um die ein drahtlosen Temperatursensors 16 in Klammerbauform geklemmt werden kann. Die elektrischen Ladekontakte 40 sind exemplarisch als ringförmig an der Außenfläche der Auswölbung 37 angeordnete Elemente gezeigt.

In Figur 5B ist das Gehäuse 3 mit Sensorkupplungen 36 gezeigt, um die ein drahtlosen Temperatursensors 16, aber auch ein anderer Sensor, eingeschoben oder eingesteckt werden kann. Die elektrischen Ladekontakte 40 sind exemplarisch als Kontaktpunkte an einer Bodenfläche der Sensorkupplung 36 gezeigt.

In Figur 5C ist das Gehäuse 3 mit rechteckförmigen Auswölbungen 37 gezeigt, an die ein drahtloser Temperatursensor 16 in Klammerbauform geklemmt werden kann. Die elektrischen Ladekontakte 40 sind exemplarisch als Kontaktpunkte an der Außenfläche der Auswölbung 37 gezeigt.

In Figur 5D ist das Gehäuse 3 mit einer Auflagefläche für kontaktloses Laden 41 gezeigt, an die ein drahtloser Temperatursensor 16 oder ein anderer drahtloser Sensor aufgelegt oder angelegt werden kann. Die Aufladung erfolgt durch kontaktloses Laden, z. B. über induktive Energieübertragung.

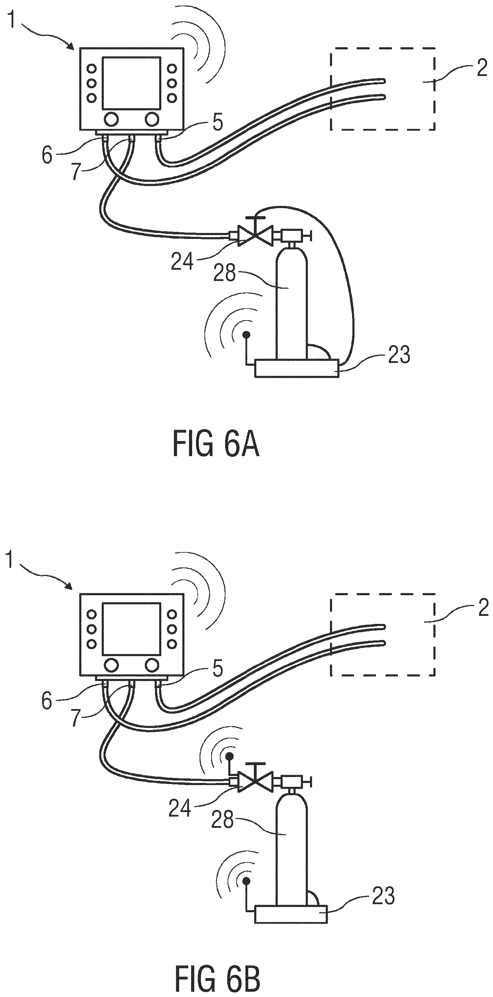

In Figur 6A ist eine weitere mögliche Ausgestaltungsform des intelligenten Servicegeräts 1 gezeigt.

Der Hochdruck-/HP-Anschluss 5 und der Niederdruck-/LP-Anschluss 6 des Servicegeräts 1 sind über Schlauchverbindungen mit einer Klimaanlage 2 verbunden.

Zwischen dem Serviceanschluss 7 des Servicegeräts 1 besteht zudem eine Schlauchverbindung zum Ausgang eines elektrischen Schaltventils 24, welches eingangsseitig mit einer Druckgasflasche 28 verbunden ist.

Die Druckgasflasche 28 steht auf einer Waage 23.

Die Waage 23 und das Servicegerät 1 stehen miteinander in Funkverbindung. Das elektrische Schaltventil 24 ist kabelgebunden mit der Waage 23 verbunden.

In Figur 6B ist eine weitere mögliche Ausgestaltungsform des intelligenten Servicegeräts 1 gezeigt.

Der Hochdruck-/HP-Anschluss 5 und der Niederdruck-/LP-Anschluss 6 des Servicegeräts 1 sind über Schlauchverbindungen mit einer Klimaanlage2 verbunden.

Zwischen dem Serviceanschluss 7 des Servicegeräts 1 besteht zudem eine Schlauchverbindung zum Ausgang eines elektrischen Schaltventils 24, welches eingangsseitig mit einer Druckgasflasche 28 verbunden ist.

Die Druckgasflasche 28 steht auf einer Waage 23. Die Waage 23 und das Servicegerät 1 stehen miteinander in Funkverbindung. Das elektrische Schaltventil 24 steht ebenfalls mit dem Servicegerät 1 und/oder der Waage 23 in Funkverbindung.

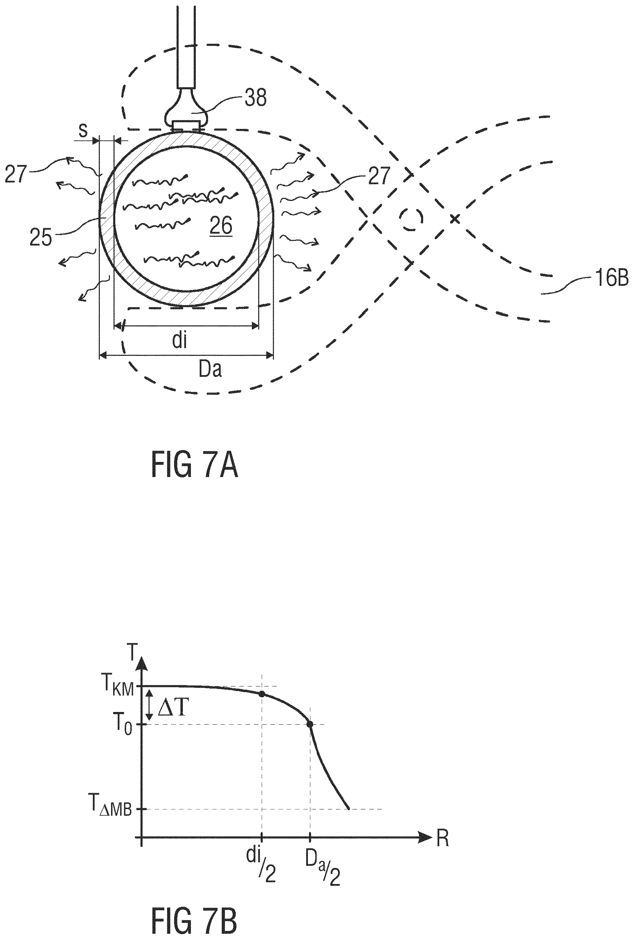

In Figur 7A ist eine Rohrleitung 25 für ein Kältemittel 26 im Querschnitt dargestellt.

Ein Sensorkopf eines Temperatursensors 38 steht in thermischem Kontakt mit einer äußeren Oberfläche der Rohrleitung 25.

Die Rohrleitung 25 gibt Wärme an ihre Umgebung ab (=Wärmeabgabe 27), da das Kältemittel 26 in der Rohrleitung 25 in dieser Darstellung eine höhere Temperatur als eine Umgebungstemperatur hat.

Geometriedaten der Rohrleitung 25 sind durch einen Außendurchmesser Da, einen Innendurchmesser di sowie eine Wandstärke s qualitativ dargestellt.

In Figur 7B ist qualitativ ein Temperaturverlauf von der Mitte der Rohrleitung 25 gemäß Figur 7A über den Radius aufgetragen.

Während die Temperatur nahe am Mittelpunkt zumindest im Wesentlichen konstant ist, fällt sie zum inneren Rand der Rohrleitung 25 bei di/2 hin leicht ab, da über eine Rohleitungswand Wärme an die Umgebung abgeführt wird.

Innerhalb der Rohrleitungswand zwischen di/2 und Da/2 ergibt sich ein Temperaturgradient, dessen Verlauf von der Temperatur des Kältemittels 26, der Umgebungstemperatur der Umgebung und den Wärmeleitungseigenschaften des Rohrmaterials abhängt.

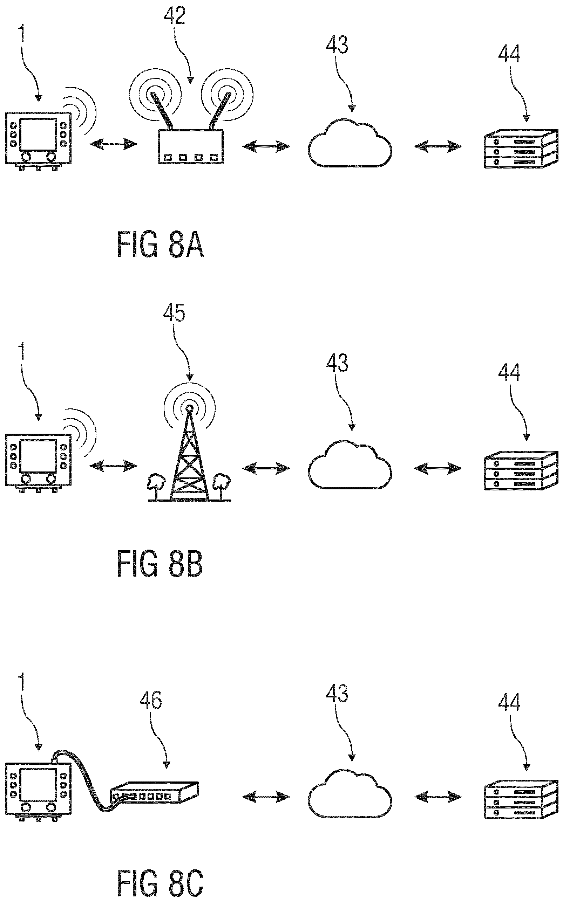

In Figur 8A ist schematisch eine mögliche Ausgestaltung einer Kommunikationsanordnung gezeigt, in der eine mögliche Ausgestaltungsform des intelligenten Servicegeräts 1 über einen WLAN Router 42 und eine internetgestützte Verbindung 43 mit einem Server 44 verbunden ist oder wird.

Das Servicegerät 1 steht dabei in Funkverbindung mit dem WLAN Router 42. Der WLAN Router 42 steht wiederum, beispielsweise kabelgebunden, in einer internetgestützten Verbindung 43 mit dem Server 44.

In Figur 8B ist schematisch eine weitere mögliche Ausgestaltung einer Kommunikationsanordnung gezeigt, in der eine mögliche Ausgestaltungsform des intelligenten Servicegeräts 1 über eine Mobilfunkverbindung zu einem Mobilfunkmast 45 und eine internetgestützte Verbindung 43 mit einem Server 44 verbunden ist oder wird.

In Figur 8C ist schematisch eine weitere mögliche Ausgestaltung einer Kommunikationsanordnung gezeigt, in der eine mögliche Ausgestaltungsform des intelligenten Servicegeräts 1 kabelgebunden über einen Router 46 und eine internetgestützte Verbindung 43 mit einem Server 44 verbunden ist oder wird.

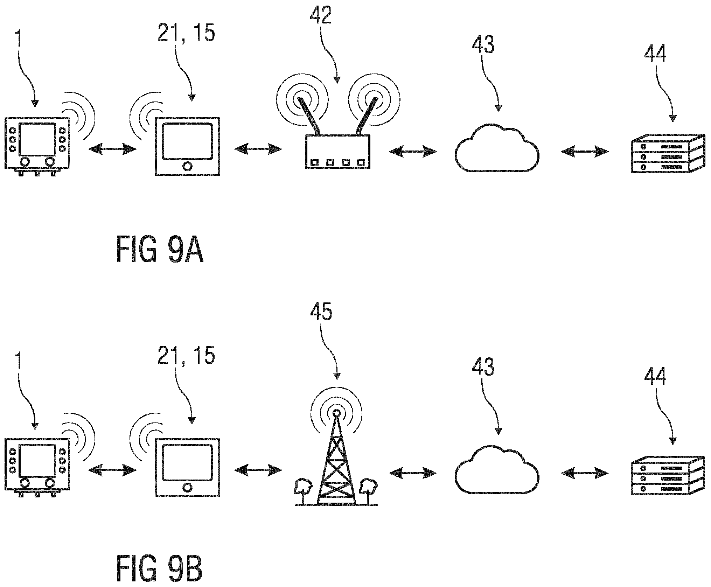

In Figur 9A ist schematisch eine weitere mögliche Ausgestaltung einer Kommunikationsanordnung gezeigt, in der eine mögliche Ausgestaltungsform des intelligenten Servicegeräts 1 mit einem tragbaren Computergerät 21 als Informationsträger 15 in Funkverbindung steht und das tragbare Computergerät 21, 15 über einen WLAN Router 42 und eine internetgestützte Verbindung 43 mit einem Server 44 verbunden ist oder wird.

In Figur 9B ist schematisch eine weitere mögliche Ausgestaltung einer Kommunikationsanordnung gezeigt, in der eine mögliche Ausgestaltungsform des intelligenten Servicegeräts 1 mit einem tragbaren Computergerät 21 als Informationsträger 15 in Funkverbindung steht und das tragbare Computergerät 21, 15 über eine Mobilfunkverbindung zu einem Mobilfunkmast 45 und eine internetgestützte Verbindung 43 mit einem Server 44 verbunden ist oder wird.

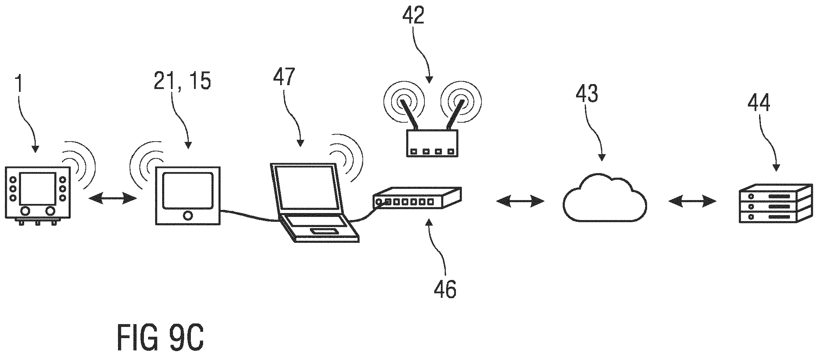

In Figur 9C ist schematisch eine weitere mögliche Ausgestaltung einer Kommunikationsanordnung gezeigt, in der eine mögliche Ausgestaltungsform des intelligenten Servicegeräts 1 mit einem tragbaren Computergerät 21 als Informationsträger 15 in Funkverbindung steht und das tragbare Computergerät 21, 15 kabelgebunden mit einem weiteren Computergerät 47 verbunden ist oder wird.

Dabei ist oder wird dieses weitere Computergerät 47 kabelgebunden über einen Router 45 und eine internetgestützte Verbindung 43 mit einem Server 44 verbunden. Alternativ wird dieses weitere Computergerät 47 drahtlos über einen WLAN Router 44 und eine internetgestützte Verbindung 43 mit einem Server 44 verbunden.

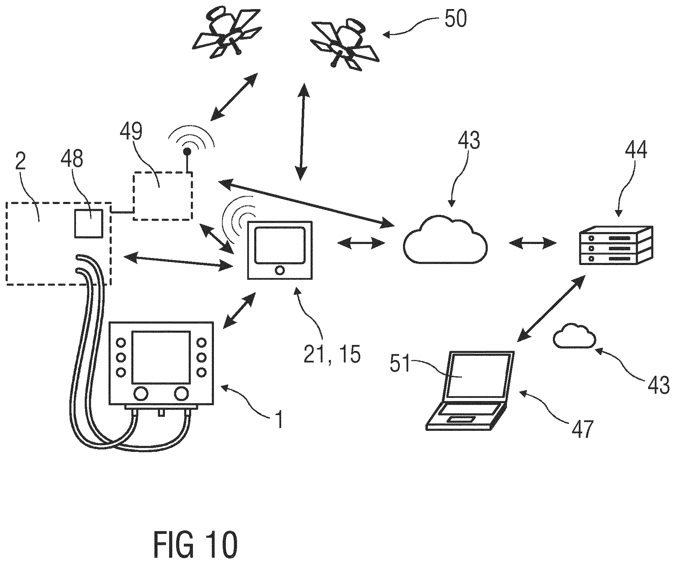

In Figur 10 sind eine mögliche Ausgestaltungsform des intelligenten Servicegeräts 1 sowie ein tragbares Computergerät 21 als Informationsträger 15 im Zentrum einer Kommunikationsanordnung gezeigt.

Das Servicegerät 1 steht in Funkverbindung mit dem tragbaren Computergerät 15, 21. Das tragbare Computergerät 15, 21 ist über eine internetgestützte Verbindung 43 mit einem Server 44 verbunden.

Die Klimaanlage 2 ist mit einer maschinenlesbaren Kennzeichnung 48 versehen.

Der Informationsträger 15 ist derart ausgestaltet, dass er die Klimaanlage 2 anhand der maschinenlesbaren Kennzeichnung 48 identifizieren kann.

Weiterhin verfügt die Klimaanlage 2 über eine schematisch angedeutete Klimaanlagen-Steuer- und/oder Kommunikationseinheit 49. Der Informationsträger 15 kann mit dieser Klimaanlagen-Steuer- und/oder Kommunikationseinheit 49 in Funkverbindung stehen.

Weiterhin ist schematisch ein satellitengestütztes Positionsbestimmungssystem 50 gezeigt. Sowohl die Klimaanlagen-Steuer- und/oder Kommunikationseinheit 49 als auch der Informationsträger 15 können mit diesem satellitengestützten Positionsbestimmungssystem 50 verbunden sein und damit ihre Positionen ermitteln.

Weitere Computergeräte 47 können über internetgestützte Verbindungen 43 mit dem Server 44 verbunden werden. Der Server 44 stellt Informationen, wie beispielsweise Anlagendaten und Messprotokolle 51 bereit, die von den Computergeräten 47 abgerufen und angezeigt werden können.

### BEZUGSZEICHENLISTE

- 1: Messgerät/Servicegerät
- 2: Anlage (Industrieanlage/Klimaanlage/HVAC-Anlage)
- 3: Gehäuse
- 4: Ventilblock
- 5: Hochdruck-/HP-Anschluss
- 6: Niederdruck-/LP-Anschluss
- 7: Serviceanschluss
- 8: Sperrventil
- 9: interner Drucksensor
- 10: Elektronische Steuereinheit
- 11: Hauptstromspeicher
- 12: Datenspeicher
- 13: Bedieneinrichtung
- 14: Funkmodul
- 15: Informationsträger
- 16: Drahtloser Temperatursensor
- 16B: Temperatursensor, z. B. in Klammerbauform
- 17: Kabelgebundener Temperatursensor
- 18: Drahtloser Drucksensor
- 19: Kabelgebundener Drucksensor
- 20: Bildschirmeinheit
- 21: Tragbares Computergerät
- 22: Bildschirm
- 23: Waage
- 24: Elektrisches Schaltventil
- 25: Rohrleitung
- 26: Kältemittel
- 27: Wärmeabgabe
- 28: Druckgasflasche
- 29: Pumpe
- 30: Kompressor
- 31: Verflüssiger/Kondensator
- 32: Expansionsventil
- 33: Verdampfer
- 34: Wärmeaufnahme
- 35: Kabelanschluss
- 36: Sensorkupplung
- 37: Auswölbung
- 38: Sensorkopf eines Temperatursensors
- 39: Bedienereingabe durch Berührung
- 40: Elektrische Ladekontakte
- 41: Auflagefläche für kontaktloses Laden
- 42: WLAN Router
- 43: Internetgestützte Verbindung
- 44: Server
- 45: Mobilfunkmast
- 46: Router
- 47: Computergerät
- 48: Maschinenlesbare Kennzeichnung
- 49: Klimaanlagen-Steuer- und/oder Kommunikationseinheit
- 50: satellitengestütztes Positionsbestimmungssystem
- 51: Anlagendaten & Protokolle
- 52: Anschluss
- 53: Benutzerkonto
- 54: Datensatz
- 60: System
- 61: Druckerzeugungseinrichtung

- B: Benutzer

## Patentansprüche

1. Verfahren zur Durchführung von Messaufgaben und zur Verwaltung von Messdaten mittels eines Systems (60), umfassend
- zumindest ein Messgerät (1),
- zumindest einen als messgeräteintegrierte Mensch-Maschine-Schnittstelle oder als tragbares Computergerät mit Bildschirm ausgebildeten Informationsträger (15),
- zumindest einen Cloud-Server (44) mit einer Cloud-Applikation und
- zumindest ein Benutzerkonto (53) in der Cloud-Applikation,
wobei
das Messgerät (1) und/oder der Informationsträger (15) dem Benutzerkonto (53) zugeordnet wird oder ist,
das Messgerät (1) Messdatenprotokolle, in welchen von Sensoren empfangene Messdaten enthalten sind, bereitstellt, die dem Benutzerkonto (53) zugeordnet sind,
das Messgerät (1) und/oder der Informationsträger (15) weitere Datensätze mit den Messdatenprotokollen verknüpfen,
ein Computergerät (21) vorgesehen ist und das Computergerät (21) oder der Informationsträger (15) dem Benutzerkonto (53) zugeordnet ist,
das Messgerät (1) und/oder der Informationsträger (15) mit dem Computergerät (21) Messdatenprotokolle und/oder weitere Datensätze austauschen, wobei keine Datenverbindung zum Cloud-Server (44) vorhanden ist oder eine vorhandene Datenverbindung zum Cloud-Server (44) während des Austauschs unterbrochen ist.

2. Verfahren nach Anspruch 1,
wobei zusätzlich die Cloud-Applikation weitere Datensätze mit den Messdatenprotokollen verknüpft.

3. Verfahren nach Anspruch 1 oder 2,
wobei
der Funktionsträger (15) oder das Computergerät (21) dem Benutzerkonto (53) zugeordnet ist, wobei
auf dem Computergerät (21) und/oder dem Informationsträger (15) bestimmte Speicher- und Analysefunktionen erst nach einer Verknüpfung oder Erstanmeldung mit einem Benutzerkonto (53) auf dem Cloud-Server (44) aktiviert werden.

4. Verfahren nach einem der vorhergehenden Ansprüche,
wobei bei einer Erstverknüpfung oder bei einem Verbindungsaufbau
eine Identifikation des Messgeräts (1)
mit einer Identifikation eines Informationsträgers (15) oder eines Computergeräts (21) und
mit einem Benutzerkonto (53) auf dem Cloud-Server (44) gekoppelt werden
und wobei hierfür als Anmeldekennung eine IMEI Nummer, eine Mobilfunknummer und/oder eine Emailadresse mit einem Benutzer (B) und einem Password gekoppelt werden oder wird.

5. Verfahren nach Anspruch 4,
wobei dem Benutzerkonto (53) verschiedene Anlagen (2) oder Klimaanlagen (2) zuordbar oder zugeordnet sind, wobei in dem Benutzerkonto (53) eine ID Nummer einer Anlage (2) oder Klimaanlage (2) hinterlegt ist, unter welcher ein Datensatz (54) mit Messdaten einer Anlage (2) oder Klimaanlage (2) ablegbar oder abgelegt ist.

6. Verfahren nach Anspruch 5,
wobei dem Datensatz (54) einer Anlage (2) oder Klimaanlage (2) eine GPS Position, ein Bild, ein Film oder eine Kundenreferenz zuordbar oder zugeordnet ist.

## Claims

1. Method for carrying out measurement tasks and for managing measurement data by means of a system (60), comprising
- at least one measuring apparatus (1),
- at least one information carrier (15) designed as a measuring apparatus-integrated human-machine interface or as a portable computer apparatus with a screen,
- at least one cloud server (44) with a cloud application and
- at least one user account (53) in the cloud application,
wherein
the measuring apparatus (1) and/or the information carrier (15) are/is assigned to the user account (53),
the measuring apparatus (1) provides measurement data logs containing measurement data received from sensors, which are assigned to the user account (53),
the measuring apparatus (1) and/or the information carrier (15) link(s) further data sets with the measurement data logs,
a computer apparatus (21) is provided and the computer apparatus (21) or the information carrier (15) is assigned to the user account (53),
the measuring apparatus (1) and/or the information carrier (15) exchange(s) measurement data logs and/or further data sets with the computer apparatus (21), wherein there is no data connection to the cloud server (44) or an existing data connection to the cloud server (44) is interrupted during the exchange.

2. Method according to Claim 1,
wherein the cloud application additionally links further data sets with the measurement data logs.

3. Method according to Claim 1 or 2,
wherein
the function carrier (15) or the computer apparatus (21) is assigned to the user account (53), wherein
specific storage and analysis functions are activated on the computer apparatus (21) and/or the information carrier (15) only after a link or initial login to a user account (53) on the cloud server (44) has taken place.

4. Method according to any of the preceding claims,
wherein during an initial link or during a connection set-up
an identification of the measuring apparatus (1) is coupled to an identification of an information carrier (15) or of a computer apparatus (21) and to a user account (53) on the cloud server (44), and wherein for this purpose, as login identifier, an IMEI number, a mobile radio number and/or an email address are/is coupled to a user (B) and a password.

5. Method according to Claim 4,
wherein different systems (2) or air-conditioning systems (2) are assignable or assigned to the user account (53), wherein an ID number of a system (2) or air-conditioning system (2) is stored in the user account (53), under which ID number a data set (54) with measurement data of a system (2) or air-conditioning system (2) is storable or stored.

6. Method according to Claim 5,
wherein a GPS position, an image, a film or a customer reference is assignable or assigned to the data set (54) of a system (2) or air-conditioning system (2).

## Revendications

1. Procédé pour réaliser des tâches de mesure et de gestion de données de mesure au moyen d'un système (60), comprenant
- au moins un appareil de mesure (1),
- au moins un support d'informations (15) réalisé sous la forme d'une interface homme-machine intégrée à l'appareil de mesure ou sous la forme d'un appareil informatique portable équipé d'un écran,
- au moins un serveur en nuage (44) comprenant une application en nuage et
- au moins un compte d'utilisateur (53) dans l'application en nuage,
l'appareil de mesure (1) et/ou le support d'informations (15) étant associé au compte d'utilisateur (53),
l'appareil de mesure (1) mettant à disposition des protocoles de données de mesure dans lesquels sont incluses les données de mesure reçues par des capteurs et lesquels sont associé au compte d'utilisateur (53),
l'appareil de mesure (1) et/ou le support d'informations (15) combinant des jeux de données supplémentaires avec les protocoles de données de mesure,
un appareil informatique (21) étant présent, et l'appareil informatique (21) ou le support d'informations (15) étant associé au compte d'utilisateur (53),
l'appareil de mesure (1) et/ou le support d'informations (15) échangeant des protocoles de données de mesure et/ou des jeux de données supplémentaires avec l'appareil informatique (21), aucune liaison de données avec le serveur en nuage (44) n'étant présente ou une liaison de données présente avec le serveur en nuage (44) étant interrompue pendant l'échange.

2. Procédé selon la revendication 1,
l'application en nuage combinant en plus des jeux de données supplémentaires avec les protocoles de données de mesure.

3. Procédé selon la revendication 1 ou 2,
le support de fonctions (15) ou l'appareil informatique (21) étant associé au compte d'utilisateur (53),
certaines fonctions de mémorisation et d'analyse sur l'appareil informatique (21) et/ou le support d'informations (15) n'étant activées qu'après une combinaison ou une première connexion avec un compte d'utilisateur (53) sur le serveur en nuage (44).

4. Procédé selon l'une des revendications précédentes,
lors d'une première combinaison ou lors de l'établissement d'une connexion,
une identification de l'appareil de mesure (1) étant couplée
avec une identification d'un support d'informations (15) ou d'un appareil informatique (21) et
avec un compte d'utilisateur (53) sur le serveur en nuage (44)
un numéro IMEI, un numéro de radiocommunication mobile et/ou une adresse électronique étant couplés ou couplé à cet effet avec un utilisateur (B) et un mot de passe en tant qu'identifiant de connexion.

5. Procédé selon la revendication 4,
différentes installations (2) ou installations de climatisation (2) pouvant être associées ou étant associées au compte d'utilisateur (53), un numéro d'identification d'une installation (2) ou d'une installation de climatisation (2) étant stocké dans le compte d'utilisateur (53), sous lequel peut être déposé ou est déposé un jeu de données (54) avec des données de mesure d'une installation (2) ou d'une installation de climatisation (2).

6. Procédé selon la revendication 5,
une position GPS, une photo, un film ou une référence de client pouvant être associé ou étant associé au jeu de données (54) d'une installation (2) ou d'une installation de climatisation (2).
